(19) **Europäisches Patentamt / European Patent Office / Office européen des brevets**

(11) **EP 1 650 416 B1**

(12) **EUROPEAN PATENT SPECIFICATION**

(45) Date of publication and mention
of the grant of the patent:
**03.12.2014 Bulletin 2014/49**

(51) Int Cl.:
*F02D 11/10* (2006.01)  *F02D 41/04* (2006.01)
*F02D 41/14* (2006.01)

(21) Application number: **05022096.1**

(22) Date of filing: **11.10.2005**

(54) **Torque control system for vehicle**

Drehmomentsteuerungssystem für ein Kraftfahrzeug

Système de commande du couple d'un véhicule

(84) Designated Contracting States:
**DE FR GB**

(30) Priority: **20.10.2004  JP 2004305116**

(43) Date of publication of application:
**26.04.2006  Bulletin 2006/17**

(73) Proprietor: **DENSO CORPORATION**
**Kariya-city, Aichi-pref., 448-8661 (JP)**

(72) Inventor: **Isojima, Koichiro**
**Kariya-city**
**Aichi-pref., 448-8661 (JP)**

(74) Representative: **TBK**
**Bavariaring 4-6**
**80336 München (DE)**

(56) References cited:
**EP-A2- 1 447 546    EP-A2- 1 555 410**
**DE-A1- 19 534 633    DE-A1- 19 753 996**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a torque control system for vehicle. The torque control system controls the injection quantity of fuel or the quantity of intake air supplied to the cylinders of an engine based on a driver request torque requested by a driver, and thereby variably controls engine output shaft torque generated at the output shaft of the engine.

When an accelerator pedal is abruptly depressed or released in an attempt to accelerate or decelerate a diesel engine, injection quantity smoothing control has been conventionally carried out. This is done to make change in injection quantity moderate to mitigate acceleration/deceleration shock due to sharp increase or decrease in injection quantity. (Refer to Patent Documents 1 and 2, for example.) Also, a torque control system for vehicle that variably controls engine output shaft torque produced at the output shaft of an engine by the following measure has been proposed: a driver request torque requested by a driver is computed based on the amount of the driver's accelerator pedal depression and an engine revolution speed; and injection quantity or intake air quantity is controlled based on this driver request torque. (Refer to Patent Document 3, for example.)

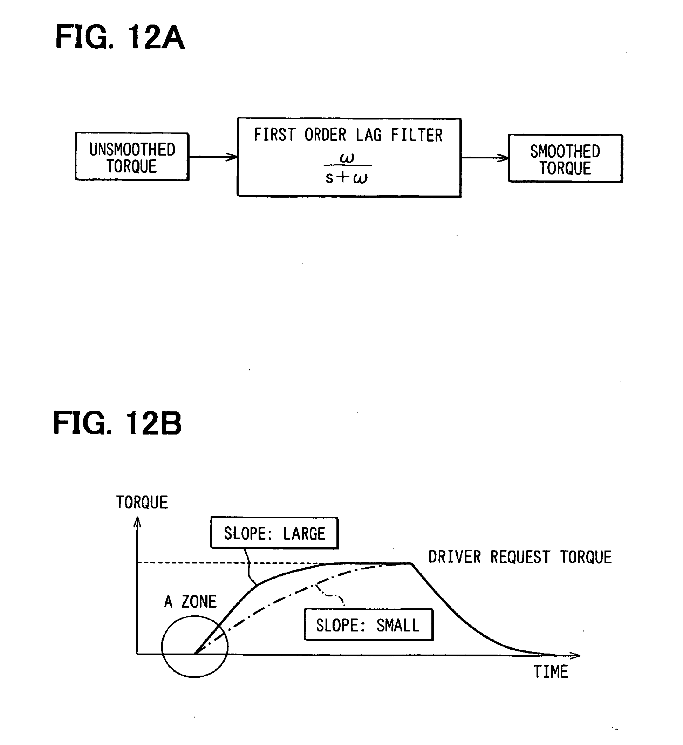

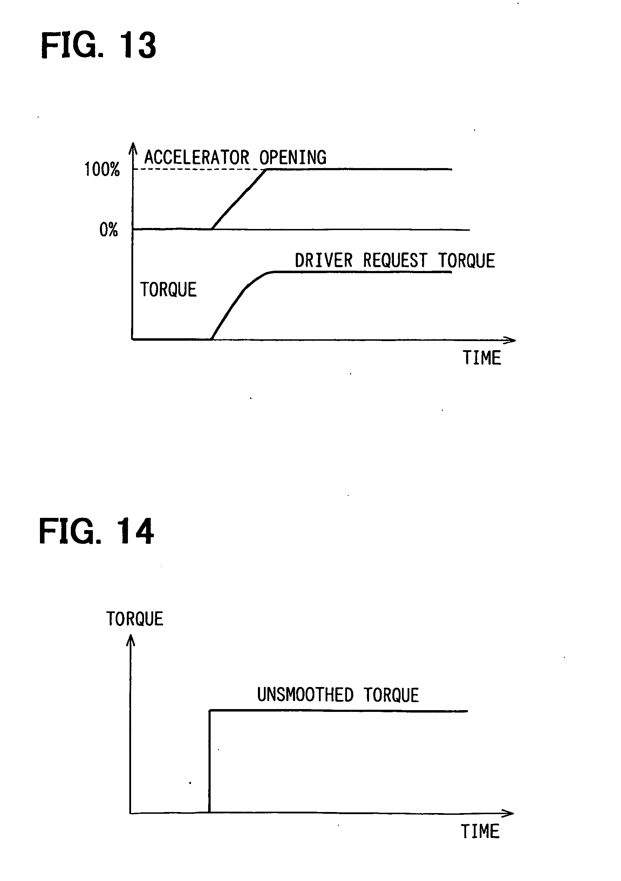

Even in such a torque control system for vehicle as described in Patent Document 3, it is preferable that such torque smoothing control as described in Patent Documents 1 and 2 should be carried out. That is, it is preferable that smoothing should be carried out on the following output waveform as illustrated in FIG. 12A, 12B and FIG. 13: the output waveform of an accelerator opening signal produced when it goes from the rising edge (or falling edge) of the current value (e.g. accelerator opening: 0%) to a target value (e.g. accelerator opening: 100%) through an intermediate region with change in a driver's accelerator operation. This smoothing is carried out using a first-order lag filter both at the time of acceleration request when an accelerator pedal is abruptly depressed and at the time of deceleration request when the accelerator pedal is abruptly released. When an acceleration/deceleration request is made by the driver, smoothing is preferably carried out so that the response waveform of driver request torque produced when it goes from the rising edge (or falling edge) of the current torque corresponding to the above current value to the target torque corresponding to the above target value through the intermediate region is smoothed. FIG. 12B is a drawing illustrating the response waveform of driver request torque produced when an acceleration/deceleration request is made by a driver in conventional engine torque control.

When the driver depresses the accelerator pedal in order to accelerate the vehicle, the response waveform (unsmoothed torque) of driver request torque is computed based on change in the driver's accelerator operation in conjunction with this accelerator pedal depression, as illustrated in FIG. 12A. As illustrated in FIG. 14, this unsmoothed torque has stepwise response waveform corresponding to change in the driver's accelerator operation. The unsmoothed torque is converted into the response waveform (smoothed torque) of driver request torque through a first-order lag filter expressed by a transfer function of $\{\omega / (s + \omega)\}$. Here, "s" is Laplace operator, and "$\omega$" is frequency response. Then, the injection quantity or the intake air quantity is controlled based on the smoothed torque. As a result, acceleration/deceleration shock due to sharp increase or decrease in injection quantity or intake air quantity can be mitigated.

However, the conventional art poses problems. In a conventional torque control system for vehicle, the response waveform of driver request torque that is changed in conjunction with change in torque response requested by a driver, that is, change in the driver's accelerator operation is smoothed using a first-order lag filter. The first-order lag filter is used both for acceleration and for deceleration. As illustrated in FIG. 12B, therefore, in case of rising edge (acceleration start region: A zone) in acceleration, the inclination of the rising edge of the response waveform of driver request torque is too steep (slope: large) as compared with the intermediate region and the convergence region. As a result, driving comfort is impaired due to initial acceleration shock. Also, in case of the initial region of the falling edge (deceleration start region) in deceleration, the inclination of the rising edge of the response waveform of driver request torque is too steep (slope: large) as compared with the intermediate region and the convergence region. As a result, driving comfort is impaired due to initial deceleration shock.

One of possible measures to cope with this is as follow: a time constant ($\tau$) by which the transfer function $\{\omega / (s + \omega)\}$ is multiplied to mitigate the initial acceleration/deceleration shock using a first-order lag filter is increased; and the inclination of the rising edge of the response waveform of driver request torque is decreased (slope: small). However, this poses a problem. Thereafter, the inclinations of the intermediate region and the convergence region also become gentle, and the following of target torque (unsmoothed torque) of driver request torque by smoothed torque is degraded. More specific description will be given. The target torque attainment time from acceleration/deceleration start time to convergence time when the smoothed torque converges to the target torque (unsmoothed torque) of driver request torque is lengthened. As a result, the responsibility of engine torque control (e.g. accelerator response) is deteriorated, and this impairs the overall driving comfort.

[Patent Document 1] JP-07-150998A
[Patent Document 2] JP-11-182294A

**EP 1 650 416 B1**

Document DE 195 34 633 A1 discloses a torque control system as set out in the preamble of claim 1. In particular, according to this document a throttle control is operated by a sensor for the throttle pedal position and by a control which monitors the engine speed, rate of change of throttle control etc. to compute optimum control signals for the throttle setting. The control uses different filter constants to process the control signals and to achieve different levels of response time. The system has at least two filter constants, to operate below and above a threshold value. Normally two thresholds are used, with three filter constants. The higher threshold involves a faster response i.e. a faster change in throttle control setting. The control takes into account the movement of the engine mountings with torque changes.

Document DE 197 53 996 A1 discloses a judder vibrations damping method for a motor vehicle. According to this document, a target value set by an accelerator pedal is filtered. The filtering is effected by using a filter which has an integral characteristic and is a first order filter.

Document EP 1 447 546 A2 discloses a further example for a torque control system, wherein an engine control unit including a phase advance compensator is described.

Post-published document EP 1 555 410 A2 describes another example for a torque control system, wherein the reaction of an accelerator pedal signal to changes in the position of an accelerator pedal is damped.

An object of the present invention is to provide a torque control system for vehicle wherein when an acceleration/deceleration request is made by a driver, the initial acceleration/deceleration shock can be mitigated and the driving comfort can be enhanced. Another object of the present invention is to provide a torque control system for vehicle wherein deterioration in accelerator response can be prevented, and thus the overall driving comfort can be enhanced.

This object is solved by a torque control for a vehicle as set out in claim 1.

Advantageous developments are defined in the dependent claims.

According to present invention, a filtering means is provided. An accelerator opening signal outputted from an accelerator opening sensor when an acceleration/deceleration request is made by a driver changes with time. The filtering means smoothes the response waveform of accelerator opening computed by an accelerator opening computing means at a predetermined smoothing rate with this temporal change. The rising edge or falling edge of the response waveform of accelerator opening is made gentler in slope than the intermediate region of the response waveform of accelerator opening by this filtering means. As a result, the initial acceleration/deceleration shock can be mitigated when an acceleration/deceleration request is made by the driver. Therefore, when a vehicle is caused to take off or when the driving status of a vehicle is shifted from constant speed running to acceleration/deceleration running, the driving comfort can be enhanced.

FIG. 1A is an explanatory drawing illustrating a smoothing method using a second-order lag filter, and FIG. 1B is a timing chart illustrating the torque response waveform produced when an acceleration/deceleration request is made, according to a first embodiment.

FIG. 2 is a timing chart illustrating the torque response waveform produced when an acceleration request is made, according to the first embodiment.

FIG. 3 is a schematic diagram illustrating the overall configuration of a common rail-type fuel injection system according to the first embodiment.

FIG. 4 is a flowchart illustrating a control method for injector injection quantity according to the first embodiment.

FIG. 5 is an explanatory drawing illustrating a computation method for driver request torque according to the first embodiment.

FIG. 6 is an explanatory drawing illustrating a computation method for running resistance according to the first embodiment.

FIG. 7 is a flowchart illustrating a computation method for driver request torque according to the first embodiment.

FIG. 8 is an explanatory drawing illustrating a method for changing the smoothing rate of a second-order lag filter according to the first embodiment.

FIG. 9 is an explanatory drawing illustrating a method for changing the smoothing rate of a second-order lag filter according to a second embodiment.

FIG. 10A is an explanatory drawing illustrating a smoothing method using a second-order lag filter; FIG. 10B is an explanatory drawing illustrating the control logic of ECU; and FIG. 10C is a timing chart illustrating the torque response waveform produced when an acceleration/deceleration request is made according to a third embodiment.

FIG. 11 is an explanatory drawing illustrating the control logic of ECU according to a fourth embodiment.

FIG. 12A is an explanatory drawing illustrating a smoothing method using a first-order lag filter, and FIG. 12B is a timing chart illustrating the response waveform of driver request torque produced when an acceleration/deceleration request is made by a driver according to a conventional art.

FIG. 13 is a timing chart illustrating change in accelerator opening and driver request torque that occurs when an acceleration request is made according to a conventional art.

FIG. 14 is a timing chart illustrating the torque response waveform produced when an acceleration request is made according to a conventional art.

[First Embodiment]

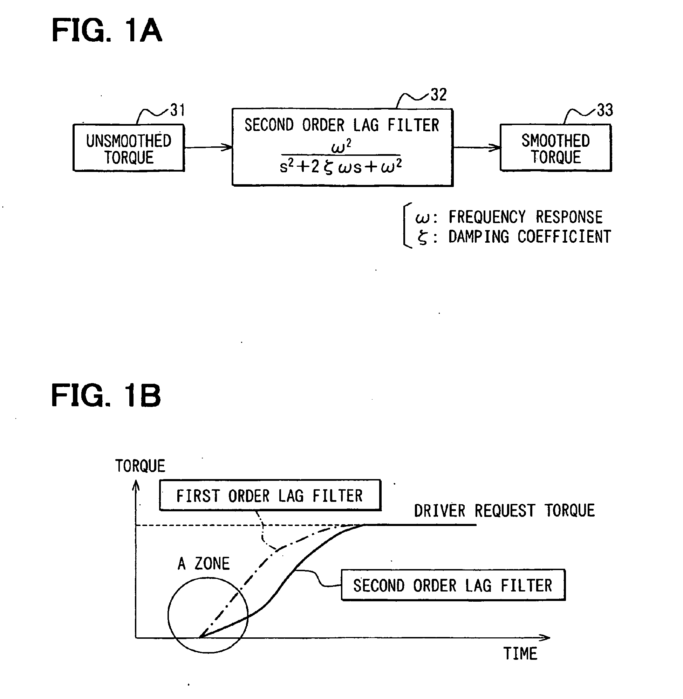

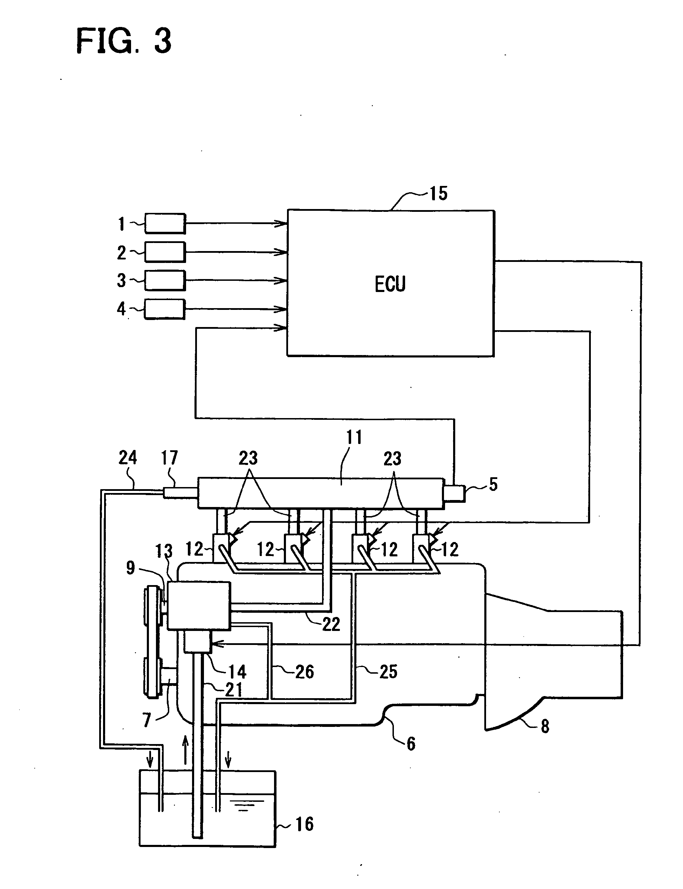

FIG. 1A, 1B through FIG. 8 illustrate a first embodiment of the present invention, and FIG. 3 is a drawing illustrating the overall configuration of a common rail-type fuel injection system.

Fuel injecting equipment for internal combustion engine in this embodiment is intended to be mounted in a vehicle, such as automobile. It is an engine torque control device for diesel vehicle (diesel engine control system) so designed that the following operation is performed: the amount of a driver's accelerator operation (accelerator opening) is computed based on an accelerator opening signal outputted from an accelerator opening sensor 1. A driver request torque is computed based on this computed accelerator opening. The injection quantity of fuel injected and supplied to the combustion chamber of each cylinder of an internal combustion engine (hereafter, referred to as "engine 6"), such as multicylinder diesel engine, mounted in a vehicle is controlled based on this computed driver request torque. And then, the output shaft torque of the engine 6 is thereby variably controlled.

The engine control system in this embodiment is mainly a common rail-type fuel injection system (accumulator fuel injection equipment) known as a fuel injection system for diesel engine. It is so constructed that the following operation is performed: high-pressure fuel stored in a common rail 11 is injected and supplied to the combustion chamber of each cylinder of the engine 6 through a plurality of fuel injection valves (injectors) 12 mounted in correspondence with the respective cylinders of the engine 6. This common rail-type fuel injection system includes: the common rail 11 that stores high-pressure fuel whose pressure is equivalent to fuel injection pressure; a plurality of the injectors 12 (four injectors in this example) that inject and supply fuel to the combustion chamber of each cylinder of the engine 6 with predetermined injection timing; an inlet fuel metering-type fuel supply pump (supply pump) 13 that pressurizes fuel sucked into a pressurization chamber through an inlet metering valve (SCV) 14 and increases its pressure; and an engine control unit (hereafter, referred to as "ECU") 15 that electronically controls the electromagnetic valves (not shown) of a plurality of the injectors 12 and the inlet metering valve 14 of the supply pump 13.

The output shaft (e.g. crank axle, hereafter, referred to as "crankshaft 7") of the engine 6 is coupled with the input shaft of an automatic speed change gear. The automatic speed change gear functions as a transmission system for transmitting the rotational power of the engine 6 to a drive axle (drive shaft) and driving wheels (drive wheels) through a torque converter, not shown, as an automatic clutch mechanism, In this embodiment, an automatic transmission, which is referred to as "transmission 8" hereinafter, is mounted as the automatic speed change gear. The transmission has the forward-side shift stage pluralized and changes the revolution speed of the engine 6 to a predetermined transmission gear ratio. A manual transmission may be used as a transmission system.

The common rail 11 is connected to the discharge port of the supply pump 13 for discharging high-pressure fuel through a fuel supply pipe 22. A pressure limiter 17 is installed in the relief pipe (fuel return pipe) 24 running from the common rail 11 to a fuel tank 16. When the fuel pressure in the common rail 11 exceeds a preset critical pressure, the pressure limiter 17 is opened to limit the fuel pressure in the common rail 11 to the preset critical pressure or below. Each of a plurality of the injectors 12 mounted in correspondence with the respective cylinders of the engine 6 is an electromagnetic fuel injection valve including: a fuel injection nozzle that is connected to the downstream end of one of a plurality of fuel supply pipes (branch pipes) 23 branched from the common rail 11, and injects fuel into the combustion chamber of the corresponding cylinder of the engine 6; an electromagnetic valve that drives a nozzle needle housed in the fuel injection nozzle in the valve opening direction; a needle energizing means (not shown), such as a spring, that energizes the nozzle needle in the valve closing direction; and the like.

Fuel injection from the injector 12 of each cylinder into the combustion chamber of each cylinder of the engine 6 is electronically controlled by the following: power application to and stop of power application to (ON/OFF) of the solenoid coils of the electromagnetic valves that increasingly and decreasingly control the fuel pressure in back pressure control chambers that control the operation of command pistons interlocked with the nozzle needles. More specific description will be given. The solenoid coils of the electromagnetic valves of the injectors 12 are energized and the nozzle needles open a plurality of injection orifices formed at the ends of the nozzle bodies. While the injection orifices are thus open, the high-pressure fuel stored in the common rail 11 is injected and supplied into the combustion chamber of each cylinder of the engine 6. Thus, the engine 6 is operated. The injectors 12 are provided with leakage ports for letting surplus fuel and fuel discharged from the back pressure control chambers out to the low pressure side of the fuel system. Leakage fuel from the injectors 12 is returned to the fuel tank 16 through a fuel return pipe 25.

The supply pump 13 is provided with two or more pressure feed systems (pump elements) that pressurize sucked low-voltage fuel to increase its pressure, and pressure feed and supply it into the common rail 11. The supply pump is a high-pressure supply pump of such type that the fuel discharge rates of all the pressure feed systems are controlled by adjusting fuel intake with one inlet metering valve 14. The supply pump 13 includes: a publicly known feed pump (low-pressure supply pump: not shown) so designed that a pump drive axle (drive shaft or cam shaft) 9 is rotated with rotation of the crankshaft 7 of the engine 6 and low-pressure fuel is thereby pumped up from the fuel tank 16; a cam (not shown) rotationally driven by the pump drive axle 9; a plurality of plungers (not shown) that are driven by the cam and reciprocate between top dead center and bottom dead center; and a plurality of pressurization chambers (plunger chambers: not shown) in which fuel is pressurized by reciprocating motion of these plungers and its pressure is increased.

The supply pump 13 is so designed that the following takes place: the plungers reciprocatingly slide in pump cylinders, and low-pressure fuel sucked into a plurality of the pressurization chambers from the fuel tank 16 trough the fuel supply pipe 21 is thereby pressurized and its pressure is increased. A fuel filter (not shown) is installed at some midpoint in the fuel supply pipe 21. The supply pump 13 is provided with a leakage port so as to prevent the temperature of fuel therein from becoming too high. Leakage fuel from the supply pump 13 is returned to the fuel tank 16 through a fuel return pipe 26. The inlet metering valve 14 is installed at some midpoint in a fuel intake path (not shown) formed in the supply pump 13, running from the feed pump to the pressurization chambers. The inlet metering valve adjusts the degree of opening of the fuel intake path (the amount of lift of valve body or the opening area of valve port).

The inlet metering valve 14 is electronically controlled by a pump driving current (pump driving signal) applied from the ECU 15 through a pump drive circuit, not shown. Thus, the quantity of fuel taken into the pressurization chambers of the supply pump 13 is adjusted. As a result, the fuel discharge rate at which fuel is discharged from the pressurization chambers of the supply pump 13 into the common rail 11 is controlled. The inlet metering valve 14 adjusts the fuel discharge rate at which fuel is discharged from the pressurization chambers of the supply pump 13 into the common rail 11 in proportion to the magnitude of a pump driving current applied to the solenoid coils. It thereby changes the fuel pressure in the common rail 11, which is referred to as common rail pressure, equivalent to the injection pressure of fuel injected and supplied from the injectors 12 into the combustion chamber of each cylinder of the engine 6.

The ECU 15 in this embodiment has the following built therein: a microcomputer, an injector drive circuit (EDU), and a pump drive circuit. The microcomputer is of publicly known structure, so constructed that the functions of the following are included: CPU that performs control processing and arithmetic processing; storage devices (ROM or EEPROM and memory such as RAM or standby RAM) that store various control programs, control logics, and control data; an input circuit; an output circuit, a power supply circuit; and the like. The injector drive circuit (EDU) is an injector driving means that individually applies a pulsing injector driving current to the solenoid coil of the electromagnetic valve of the injector 12 of each cylinder. The pump drive circuit is a pump driving means that applies a pump driving current to the solenoid coils of the inlet metering valve 14 of the supply pump 13.

The ECU 15 is so constructed that the following is implemented: when an ignition switch is turned on (IG / ON), ECU power is supplied; and based on a control program or control logic stored in memory, electronic control is carried out so that, for example, injection quantity or fuel injection pressure (common rail pressure) becomes equal to a control value. Also, the ECU 15 is so constructed that the following is implemented: when the ignition switch is turned off (IG / OFF) to interrupt ECU power supply, the above control based on the control program or control logic stored in memory is forcibly terminated. Further, the ECU 15 is so constructed that the following is implemented: an output value (common rail pressure signal) outputted from a fuel pressure sensor 5 installed in the common rail 11, sensor signals from other various sensors, and switch signals from some of switches installed in the vehicle are converted from analog to digital at an A-D converter, and then inputted to the microcomputer built in the ECU 15.

The input circuit of the microcomputer is connected with the following sensors as operational status detecting means for detecting the operational status of the engine 6 and operating conditions: an accelerator opening sensor (amount of accelerator operation detecting means) for detecting the amount of the driver's accelerator pedal (not shown) depression; a crank angle sensor 2 for detecting the rotation angle of the crankshaft 7 of the engine 6; a cooling water temperature sensor 3 for detecting engine cooling water temperature (THW); a fuel temperature sensor 4 for detecting fuel temperature (THF) on the pump inlet side where fuel is sucked into the supply pump 13; and the like. Of the above sensors, the accelerator opening sensor 1 outputs an accelerator opening signal corresponding to the amount of the driver's accelerator pedal (not shown) depression (amount of accelerator operation). The ECU 15 functions as an accelerator opening computing means for computing the following based on an accelerator opening signal outputted from the accelerator opening sensor 1: the amount of accelerator operation (hereafter, referred to as "accelerator opening": ACCPF) that varies along with the driver's accelerator operation (the driver's accelerator pedal operation for acceleration/deceleration or constant speed running).

The crank angle sensor 2 comprises an electromagnetic pick-up coil provided opposite to the outer circumferential surface of an NE timing rotor (not shown) installed on the crankshaft 7 of the engine 6 or the pump drive axle (drive shaft or cam shaft) 9 of the supply pump 13. A plurality of projected teeth are disposed on the outer circumferential surface of the NE timing rotor at predetermined intervals of rotation angle. When the projected teeth of the NE timing rotor repeatedly move close to and away from the crank angle sensor 2, the crank angle sensor 2 outputs the following by electromagnetic induction: a pulsing rotational position signal (NE signal pulse), especially, an NE signal pulse synchronized with the revolution speed of the crankshaft 7 of the engine 6 (engine revolution speed) and the revolution speed of the supply pump 13 (pump revolution speed). The ECU 15 functions as a revolution speed detecting means for measuring the time interval of NE signal pulses outputted from the crank angle sensor 2 and thereby detecting the engine revolution speed (hereafter, also referred to as "number of engine revolutions: NE").

Also, the ECU 15 is so constructed that it carries out CAN communication (e.g. present gear position, request to increase/decrease an engine output shaft torque, idle up request) with a transmission control unit (TCM: not shown) and an air conditioning system. The TCM is connected with the accelerator opening sensor 1, a vehicle speed sensor (not shown) for detecting the running speed of a vehicle (hereafter, also referred to as "vehicle speed"), and the like. The vehicle speed sensor is, for example, a reed switch-type vehicle speed sensor or magnetic reluctance element-type vehicle speed sensor. It is a vehicle speed detecting means that measures the revolution speed of the output shaft of a transmission 8 and outputs a vehicle speed signal corresponding to the running speed of the vehicle (vehicle speed). A wheel speed sensor that detects the wheel speed of a vehicle may be used as the vehicle speed detecting means.

When a select lever is set in "D" range or "2" range, the TCM performs the following operation according to an accelerator opening signal corresponding to an accelerator opening (ACCPF) from the accelerator opening sensor 1 and a vehicle speed signal corresponding to a vehicle speed (SPD) from the vehicle speed sensor: hydraulic circuits are changed by a combination of ON and OFF of an actuator, such as solenoid value, for speed variation; a plurality of gear positions (first to fourth gears in case of forward four speed, first to fifth gears in case of forward five speed, or first to sixth gears in case of forward six speed) are thereby selected (gear position detecting means); and the state of speed variation by the transmission 8 is controlled. Thus, speed variation is carried out. The transmission gear ratios (gear ratios) of first to fourth gears, first to fifth gears, or first to sixth gears are determined by the specifications of each vehicle.

The ECU 15 has a fuel pressure controlling means (common rail pressure controlling means). After the ignition switch is turned on (IG / ON), it computes the optimum common rail pressure corresponding to the operational status of the engine 6 or operating conditions with predetermined timing. Then, it drives the solenoid coils of the inlet metering valve 14 of the supply pump 13 through the pump drive circuit. It has a fuel pressure determining means that computes a target common rail pressure (target fuel pressure: PFIN) based on a number of engine revolutions (NE) and a basic injection quantity (Q) or a command injection quantity (QFIN). To attain this target fuel pressure (PFIN), it is so constructed that the pump driving current applied to the solenoid coils of the inlet metering valve 14 is adjusted and the fuel discharge rate of the supply pump 13 is feedback controlled. More specific description will be given. Using PI (Proportional Integral) control or PID (Proportional Integral Derivative) control, the fuel discharge rate of the supply pump 13 is feedback controlled so that the common rail pressure (PC) detected by the fuel pressure sensor 5 substantially agrees with the target fuel pressure (PFIN). In particular, the pump driving current (applied to the solenoid coils of the inlet metering valve 14) in correlation with the fuel discharge rate of the supply pump 13 is feedback controlled based on the following: the pressure difference ($\Delta$P) between the common rail pressure (PC) detected by the fuel pressure sensor 5 and the target fuel pressure (PFIN).

Further, the ECU 15 has an injection quantity controlling means (power source controlling means, engine controlling means). It computes the optimum injection quantity and injection timing corresponding to the operational status of the engine 6 or operating conditions. Then, it drives the solenoid coil of the electromagnetic valve of the injector 12 of each cylinder through the injector drive circuit (EDU). Further, the ECU 15 has a vehicle specification changing means. When the specifications of a vehicle that have influence on increase/decrease in the running resistance of the vehicle are various varied to make up vehicles of a wide variety of specifications, the vehicle specification changing means makes it possible to reset any one or more of the following items: vehicle weight, air resistance coefficient, frontal projected area, the rolling resistance coefficient of tires, and a constant based on tire effective radius, final transmission gear ratio, or the like as the specifications of the vehicle. To implement this, for example, a constant based on the specifications of a vehicle can be changed and the changed constant based on the specifications of the vehicle can be written over an old one and stored in memory (vehicle specification storing means), such as EEPROM or standby RAM, in the following cases: when a vehicle is retrofitted at a dealer or the like with an electric sunroof, air conditioning system, aero part, front grille guard, headlight, or the like; when vehicle specifications are upgraded; when vehicle specifications are changed to cold district-oriented specifications; when a normal option version car is modified to an off-road option version car or urban option version car; or when tires of standard specifications are replaced with tires of low rolling resistance.

The ECU 15 functions as a driver request torque computing means for performing the following operation: computing an accelerator opening (ACCPF) based on an accelerator opening signal outputted from the accelerator opening sensor 1; computing a wheel torque based on the computed accelerator opening (ACCPF); and computing a driver request torque requested from the engine 6 based on the computed wheel torque. As illustrated in FIG. 1A, it includes: an unprocessed torque computing means 31; a filtering means; and a processed torque computing means 33. The unprocessed torque computing means computes the response waveform (stepwise unsmoothed torque: Refer to FIG. 14, for example.) of driver request torque that changes substantially in agreement with temporal change in accelerator opening (ACCPF) due to an acceleration/deceleration request from the driver. The filtering means smoothes the response waveform (stepwise unsmoothed torque: Refer to FIG. 14, for example.) of driver request torque produced when it goes from the rising edge or falling edge to a target torque through the intermediate region when an accelerator opening (ACCPF) or accelerator opening signal changes with time due to an acceleration/deceleration request from the driver at a predetermined smoothing rate. The processed torque computing means computes the response waveform (smoothed torque) of driver request torque smoothed by this filtering means.

As the filtering means in this embodiment, as illustrated in FIG. 1A, a second-order lag filter 32 that performs the following operation is established: when an acceleration/deceleration request is made by the driver, it makes the rising edge (A zone) or falling edge of the response waveform (smoothed torque) of driver request torque gentler in slope than the intermediate region of the response waveform (smoothed torque) of driver request torque. This second-order lag filter 32 is an second-order lag element that makes the rising edge or falling edge of the response waveform (smoothed torque) of driver request torque that changes due to an acceleration/deceleration request from the driver gentler in slope than cases where a first-order lag filter is used, as illustrated in FIG. 1B. In addition, it is a filtering means that sets the target torque attainment time from the acceleration/deceleration start time to the convergence time when the torque converges on the target torque substantial identical with the time taken when a first-order lag filter is used.

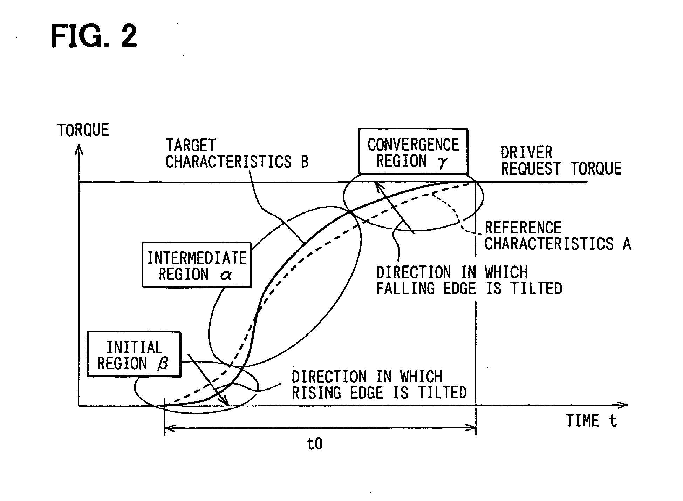

Here, the period of time required for the current torque value at the time of acceleration request to reach a target torque value is divided into initial region $\beta$, intermediate region $\alpha$, and convergence (terminal) region $\gamma$. Letting the time from acceleration start time when an acceleration request is made to the time when the torque converges on the target torque value in the response waveform of driver request torque (or accelerator opening) be t0, as illustrated in FIG. 2, the filtering means in this embodiment operates as follows (The above time is, in other words, the time required for the current torque value to reach the target torque value): it adjusts the average value of rate of increase of torque $\Delta T/\Delta t$ in the initial region $\beta$ or convergence region $\gamma$ for time t0, using frequency response $\omega$ and damping coefficient $\xi$. It thereby manipulates the torque acceleration in the intermediate region $\alpha$ of the response waveform of driver request torque (or accelerator opening). An example will be taken. If the average value of rate of increase of torque $\Delta T/\Delta t$ in the initial region $\beta$ and convergence region $\gamma$ for time t0 is set to a small value relative to reference characteristics A, the following can be implemented: the average value of rate of increase of torque $\Delta T/\Delta t$ of target characteristics in the intermediate region $\alpha$ can be set to a higher value than the average value of rate of increase of torque $\Delta T/\Delta t$ of reference characteristics A. Thus, if the average value of rate of increase of torque $\Delta T/\Delta t$ is lowered, the rising edge or falling edge of the response waveform of driver request torque (or accelerator opening) can be tilted.

[Control Method in First Embodiment]

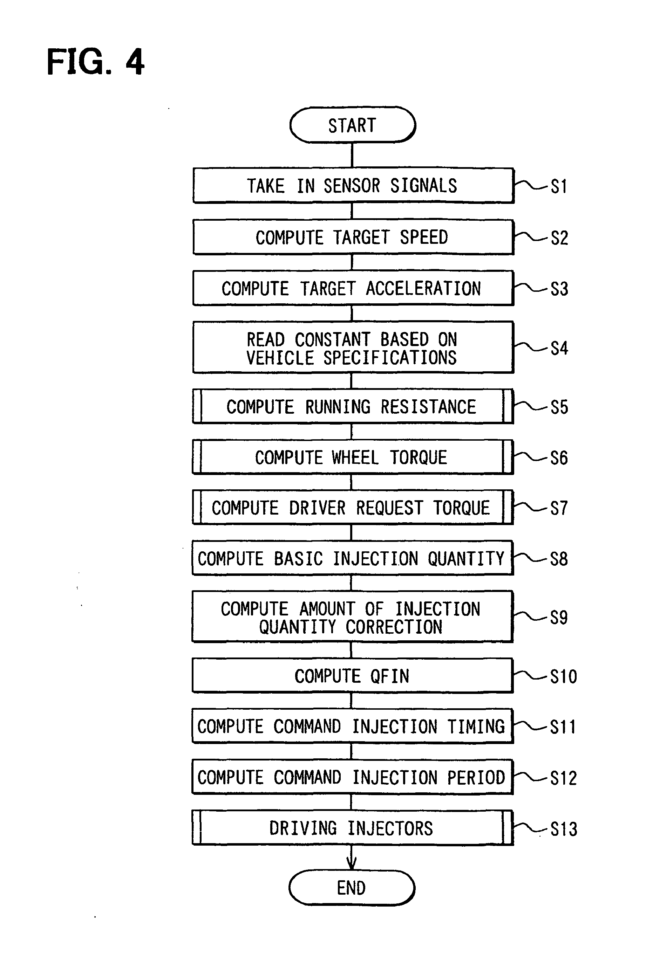

Next, brief description will be given to a control method for injection quantity in this embodiment with reference to FIG. 1A, 1B to FIG. 8. FIG. 4 is a flowchart illustrating a control method for injector injection quantity. This main routine in FIG. 4 is repeatedly carried out with predetermined timing after the ignition switch is turned on (IG / ON). The injection quantity of fuel injected and supplied into the combustion chamber of each cylinder of the engine 6 may be individually computed with respect to each cylinder of the engine 6.

First, sensor signals are taken in from various sensors (Step S1). Specifically, an accelerator opening (ACCPF) is computed according to an accelerator opening signal taken in from the accelerator opening sensor 1 (accelerator opening computing means, accelerator opening detecting means). The time interval of NE signal pulses taken in from the crank angle sensor 2 is measured to compute an engine revolution speed (NE) (engine revolution speed detecting means). A common rail pressure (PC) is computed according to a common rail pressure signal taken in from the fuel pressure sensor 5 (fuel pressure detecting means).

Here, the driver's request with respect to accelerator opening (ACCPF) is defined as follows: in steady state in which variation in accelerator opening (ACCPF) is equal to or below a first predetermined value, it requests a target running speed (hereafter, referred to as "target speed"); in transient state in which variation in accelerator opening (ACCPF) is equal to or above a second predetermined value, it requests a target acceleration. For this reason, first, the accelerator opening (ACCPF) is converted into a target speed (target speed computing means: Step S2). Next, the target speed is differentiated with respect to time to compute a target acceleration (target acceleration computing means: Step S3).

Next, a constant based on vehicle specifications is read from memory, such as EEPROM or standby RAM (Step S4). The possible vehicle specifications include the following items required to compute a running resistance encountered when the vehicle is caused to run at a constant speed or when the vehicle is accelerated/decelerated at a predetermined acceleration: vehicle weight (m); air density (p); frontal projected area (the area of the entire vehicle when the vehicle is viewed head-on: S); running resistance coefficient (air resistance coefficient, air drag coefficient, CD value: Cd) determined by the overall shape of a vehicle (e.g. body style); the rolling resistance coefficient of tires (coefficient of friction on a road: $\mu$); and the like.

Further, the possible vehicle specifications include final transmission gear ratio required to compute an engine output shaft torque from a wheel (driving wheel) torque and tire effective radius required to compute a wheel torque from a running resistance. The final transmission gear ratio is a value obtained by multiplying together the transmission gear ratios of a plurality of speed change portions, for example, the transmission gear ratio of a transmission 8 and the transmission gear ratio of a differential gear. (The final transmission gear ratio will be hereafter referred to as "transmission gear ratio" or "gear ratio.") The tire effective radius (hereafter, referred to as "tire radius": r) is a value of dimension from the center of a tire to a road surface after the tire is flattened by vehicle weight. Also, the possible vehicle specifications include tire specification values (e.g. tire radius, tire width, and tire rubber hardness). Especially, vehicle weight (m) is inevitably varied when any part is added to the vehicle or any part of the vehicle is changed. Parts, such as aero parts and front grille guard, that modifies body style vary the frontal projected area (S) and the running resistance coefficient (Cd).

Next, a running resistance applied to the vehicle when the speed requested by the driver occurs is computed from the target acceleration and the target speed (Step S5: running resistance computing means). The running resistance is converted into a wheel (driving wheel, drive axle, axle) torque corresponding to target drive axle (drive shaft) torque (driving wheel torque computing means: Step S6). A driver request torque is computed from the wheel torque (driver request torque computing means: Step S7). A basic injection quantity (Q) is computed from the driver request torque (Step S8). An amount of injection quantity correction (ΔQ) for the injection quantity (Q) is computed from engine cooling water temperature (THW), fuel temperature (THF), and the like (amount of correction computing means: Step S9). The amount of injection quantity correction (ΔQ) may be computed using publicly known proportional plus integral (PI) control or proportional plus integral plus derivative (PID) control. In this case, the amount of injection quantity correction (ΔQ) is feedback computed based on the vehicle speed difference between the actual running speed (vehicle speed) detected by the vehicle speed sensor and the target speed or smoothed target speed. The amount of injection quantity correction (ΔQ) computed at Step S9 is added to the basic injection quantity (Q) computed at Step S8 to compute a command injection quantity (target injection quantity: QFIN) under normal control (Step S10).

Next, a command injection timing (T) is computed from the engine revolution speed (NE) and the command injection quantity (QFIN) (injection timing determining means: Step S11). The energization time (injection pulse length, command injection period: TQ) of the electromagnetic valves of the injectors 12 is computed from the common rail pressure (PC) and the command injection quantity (QFIN) (injection period determining means: Step S12). A pulsing injector driving current is applied to the solenoid coil of the electromagnetic valve of the injector 12 of each cylinder through the injector drive circuit (EDU) for the period from when the command injection timing (T) comes to when the command injection period (TQ) passes (injector driving means: Step S13). Thereafter, the operation breaks from the main routine illustrated in FIG. 4.

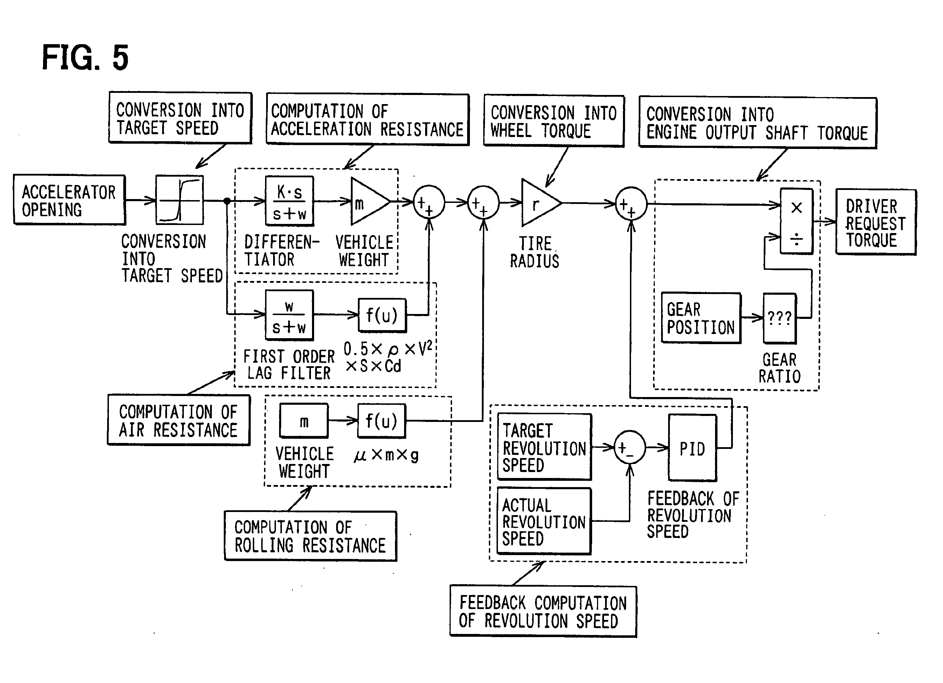

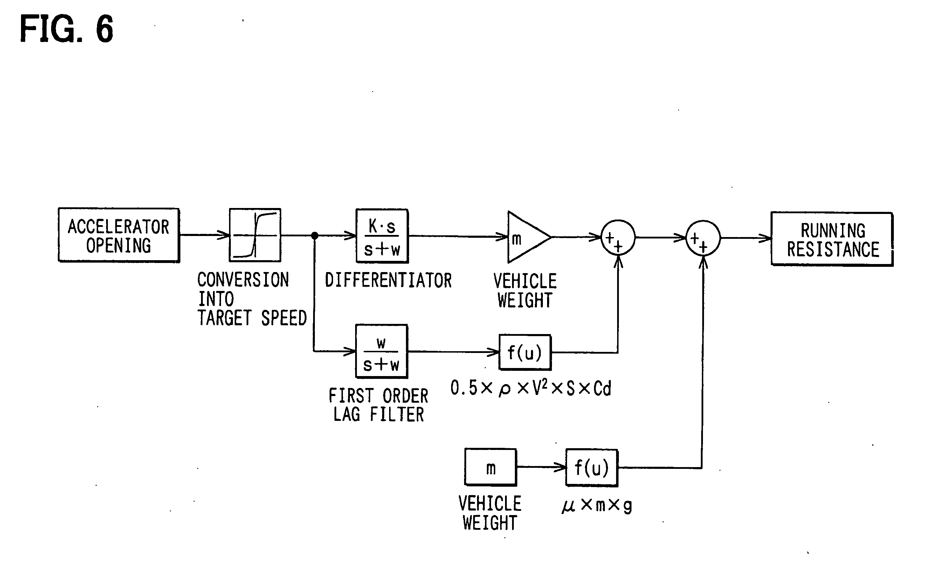

The control logic shown in FIG. 5 illustrates a computation method for driver request torque based on accelerator opening (ACCPF), for use in injector injection quantity control. The control logic shown in FIG. 6 illustrates a computation method for running resistance based on accelerator opening (ACCPF).

As mentioned above, the ECU 15 converts an accelerator opening (ACCPF) into a target speed by the target speed computing means. Thereafter, it differentiates the target speed with respect to time by a differentiator (target acceleration computing means) to compute a target acceleration ($\alpha$). Then, it reads the vehicle weight (m), one of the constants based on the vehicle specifications, from memory, such as EEPROM or standby RAM. It multiplies the computed target acceleration ($\alpha$) by the vehicle weight (m) to compute an acceleration resistance (FA) encountered when the vehicle is accelerated/decelerated on a level road (acceleration resistance computing means). Expression 1 below may be used to compute the acceleration resistance (FA).

$$FA = \{(W + \Delta W) \times \alpha\} / g \qquad \cdots (1)$$

where, W is vehicle weight (m); ΔW is weight equivalent to rotary part; $\alpha$ is target acceleration; and g is gravitational acceleration.

The ECU 15 passes the target speed through a first-order lag filter (target speed correcting means, target speed smoothing means) to smooth the target speed at a predetermined smoothing rate. (It smoothes the speed response of target speed.) It thereby sets a target speed which can be followed between the current running speed (vehicle speed) and the next time. Then, it reads constants based on the vehicle specifications, specifically, air density (p), frontal projected area (S), and running resistance coefficient (air drag coefficient, CD value: Cd), from memory, such as EEPROM or standby RAM. Then, it computes an air resistance (FD) encountered when the vehicle is caused to run on a level road at a constant speed, using the following (air resistance computing means, aerodynamic resistance computing means): target speed (V) obtained by smoothing the speed of response; air density (p); frontal projected area (S); running resistance coefficient (Cd); and Expression 2 below.

$$FD = 0.5 \times \rho \times V^2 \times S \times Cd \qquad \cdots (2)$$

Further, the ECU 15 reads constants based on the vehicle specifications, specifically, vehicle weight (m) and the rolling resistance coefficient of tires (coefficient of friction on a road: $\mu$), from memory, such as EEPROM or standby RAM. Then, it computes a rolling resistance (FR) encountered when the vehicle is caused to run on a level road, using the following (rolling resistance computing means): vehicle weight (m); coefficient of friction on a road (μ); gravitational acceleration (g); and Expression 3 below.

$$FR = \mu \times m \times g \qquad \cdots(3)$$

When the vehicle is running on a level road at a constant speed, the ECU 15 adds the air resistance (FD) and the rolling resistance (FR) to compute a running resistance (RR = FD + FR). When the vehicle is being accelerated/decelerated on a level road, the ECU adds the acceleration resistance (FA) to the sum of air resistance (FD) and rolling resistance (FR) to compute a running resistance (RR = FD + FR + FA) (running resistance computing means). When the vehicle is climbing an uphill road, a hill climbing resistance (FS) may be added to the sum of air resistance (FD) and rolling resistance (FR). The hill climbing resistance (FS) is computed based on Expression 4 below.

$$FS = W \times \sin\theta \qquad \cdots(4)$$

where, W is vehicle weight (m); and θ is the inclination of road surface. In case of a vehicle mounted with a navigation system, the inclination of road surface (θ) can be read from the vehicle running point on a map. In case of a vehicle provided with a device for detecting or estimating the inclination of road surface (θ), the inclination of road surface (θ) can be easily detected or estimated.

Further, the ECU 15 reads tire radius (r), one of the constants based on tire specification values, from memory, such as EEPROM or standby RAM. Then, it multiplies the computed running resistance (RR) by the tire radius (r) to compute (obtain by conversion) a wheel torque (WDT) (driving wheel torque computing means). The control logic in this embodiment shown in FIG. 5 illustrates a method for computing an amount of wheel torque correction (ΔWDT) during idling when the amount of accelerator operation is 0, using publicly known proportional plus integral plus derivative (PID) control or proportional plus integral (PI) control.

This is a revolution speed feedback computation means. It feedback computes a wheel torque (WDT) based on the speed difference between engine revolution speed (NE) and target revolution speed. This feedback computation is carried out so that the actual engine revolution speed (NE) computed by measuring the time interval of NE signal pulses taken in from the crank angle sensor 2 substantially agrees with the target revolution speed during idling. Thus, during idling when the amount of accelerator operation is 0, the amount of wheel torque correction (ΔWDT) is added to the wheel torque (WDT) to correct the wheel torque (WDT). Here, with respect to target revolution speed, the idle revolution speed may be set to a value 100 to 200rpm or so higher than a specified value for the following purposes: to accelerate the warm-up of an engine 6 at the time of engine start when the engine cooling water temperature (THW) is equal to or lower than a predetermined value; to enhance the effect of an air conditioning system in operation even if the vehicle is in a traffic jam; or to prevent an engine stall when an engine accessory, such as pump and alternator, that is rotationally driven by the crankshaft 7 of the engine 6 is in operation or when an electrical unit, such as headlight, is in operation.

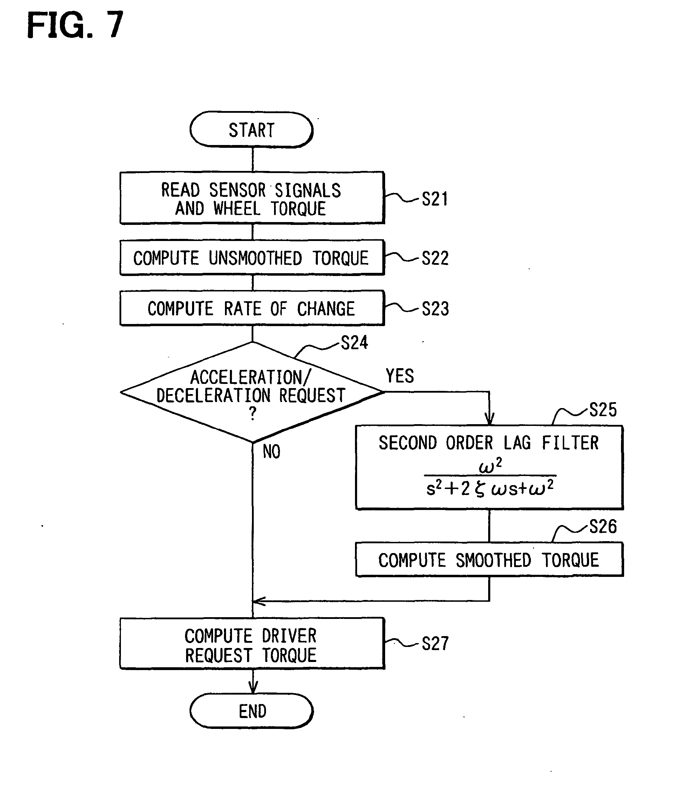

The control logic shown in FIG. 1A and the control routine (driver request torque computation routine) shown in FIG. 7 illustrate the following method: a method for smoothing the response waveform of driver request torque by a second-order lag filter 32 as a filtering means in the driver request torque computing means.

First, an accelerator opening (ACCPF) is computed based on an accelerator opening signal taken in from the accelerator opening sensor 1. In addition, the wheel torque (WDT) computed as mentioned above is read, and the current gear position is read from the TCM (Step S21). A transmission gear ratio (gear ratio), one of the constants based on the vehicle specifications, is read from memory, such as EEPROM or standby RAM. Then, the transmission gear ratio (gear ratio) corresponding to the current gear position is computed. The computed wheel torque (WDT) is divided by the transmission gear ratio (gear ratio) to compute the response waveform (unsmoothed torque) of driver request torque requested by the driver (unprocessed torque computing means: Step S22).

The rate of temporal change in the driver's accelerator operation is computed based on the rate of temporal change in an accelerator opening signal (or accelerator opening) outputted form the accelerator opening sensor 1 (Step S23). The rate of change and a preset acceleration determination threshold value and deceleration determination threshold value are compared with each other for magnitude. It is thereby determined whether the driver is making an acceleration request or a deceleration request. In acceleration request, the driver depresses the accelerator pedal farther than the present position, and in deceleration request, the driver returns the accelerator pedal from the present position (acceleration/deceleration request determining means: Step S24). If the result of this judgment is NO, that is, the rate of temporal change in the driver's accelerator operation, for example, the rate of change in accelerator opening (ACCPF) is less than the acceleration determination threshold value or less than the deceleration determination threshold value, the following operation takes place: it is determined that no acceleration/deceleration request is made by the driver, and the above unsmoothed torque is taken as driver request torque (Step S27).

If the result of the judgment at Step S24 is YES, that is, the rate of temporal change in the driver's accelerator operation, for example, the rate of change in accelerator opening (ACCPF) is equal to or higher than the acceleration determination threshold value or equal to or lower than the deceleration determination threshold value, the following operation takes place: it is determined that an acceleration/deceleration request is being made by the driver, and the above unsmoothed torque is passed through the second-order lag filter 32 (filtering means: Step S25). As a result, the response waveform (stepwise unsmoothed torque) of driver request torque is smoothed at a predetermined smoothing rate, and such smoothed torque in quadratic waveform as illustrated in FIG. 1B is computed (processed torque computing means: Step S26). At Step S27, the above smoothed torque is taken as driver request torque.

Here, the following assumption will be made: the response waveform (unsmoothed torque) of driver request torque before it is passed through the second-order lag filter 32 is TRQFR; the response waveform (smoothed torque) of driver request torque after it is passed through the second-order lag filter 32 is TRQAF; frequency response is $\omega$; damping coefficient is $\xi$; and Laplace operator is s. Thus, the smoothed torque (TRQAF) is expressed by Expression 5 below.

$$TRQAF = TRQFR \times \{\omega^2 / (s^2 + 2\zeta\omega s + \omega^2)\} \qquad \cdots(5)$$

[Effect of First Embodiment]

As mentioned above, the common rail-type fuel injection system in this embodiment takes the following measures: an accelerator opening signal outputted from the accelerator opening sensor 1 is changed due to an acceleration/deceleration request from the driver. When this accelerator opening signal (or the accelerator opening computed based on this accelerator opening signal) changes with time, the response waveform (unsmoothed torque) of driver request torque is computed by the unprocessed torque computing means 31. As a filtering means that smoothed the response waveform at a predetermined smoothing rate, the second-order lag filter 32 expressed by a transfer function of $\omega^2 / (s^2 + 2\zeta\omega s + \omega^2)$ is established. By this second-order lag filter 32, the rising edge or falling edge of the response waveform (smoothed torque) of driver request torque is made gentler in slope than the intermediate region of the response waveform (smoothed torque) of driver request torque and than cases where a first-order lag filter is used. Thus, at a transient time when the driver abruptly depresses or returns the accelerator pedal in an acceleration/deceleration request from the driver (at the time of acceleration/deceleration request), abrupt change in injection quantity is moderated. Therefore, the initial acceleration/deceleration shock encountered when an acceleration/deceleration request is made by the driver can be sufficiently mitigated. As a result, the driving comfort can be enhanced in the following cases: when the vehicle is caused to take off; and when the driving status of the vehicle is caused to transition from constant-speed driving status in which the vehicle is caused to run at a constant speed to acceleration/deceleration driving status in which the vehicle is accelerated/decelerated at a predetermined acceleration.

In a common rail-type fuel injection system in this embodiment, as mentioned above, the second-order lag filter 32 expressed by a transfer function of $\omega^2 / (S^2 + 2\zeta\omega s + \omega^2)$ is established. Thus, the inclination of the intermediate region after the response waveform (smoothed torque) of driver request torque computed based on an accelerator opening signal (or accelerator opening) changed with change in the driver's accelerator operation becomes steep. As a result, the following of a target torque in the response waveform (smoothed torque) of driver request torque by (the computed value of) driver request torque becomes favorable. (The above target torque is an estimated value of driver request torque matched with an accelerator opening signal or an accelerator opening at the time when the driver's accelerating/decelerating operation reaches a steady state.) Thus, the target torque attainment time from the rising edge or falling edge of the response waveform (smoothed torque) of driver request torque to time when the target torque is attained after the intermediate region is not lengthened. The injection quantity corresponding to the driver's accelerator operation can be swiftly obtained. Therefore, the responsibility of torque control on the engine 6, that is, the acceleration/deceleration reactivity to the driver's accelerator operation (so-called accelerator response) can be ensured. Therefore, the overall driving comfort can be enhanced.

At a transient time when the driver abruptly depresses or returns the accelerator pedal in an acceleration/deceleration request from the driver (at the time of acceleration/deceleration request), an accelerator opening signal is outputted from the accelerator opening sensor 1. The response waveform (unsmoothed torque) of driver request torque computed based on this accelerator opening signal (or accelerator opening) is smoothed at a predetermined smoothing rate. The rising edge or falling edge of the response waveform (smoothed torque) of driver request torque computed based on the accelerator opening signal (or accelerator opening) is thereby made gentler in slope than the intermediate region of the response waveform (smoothed torque) of driver request torque. Thus, the initial acceleration/deceleration shock encountered when an acceleration/deceleration request is made by the driver can be mitigated, and further the acceleration/deceleration reactivity to the driver's accelerator operation (so-called accelerator response) can be ensured. Therefore, the overall driving comfort can be enhanced.

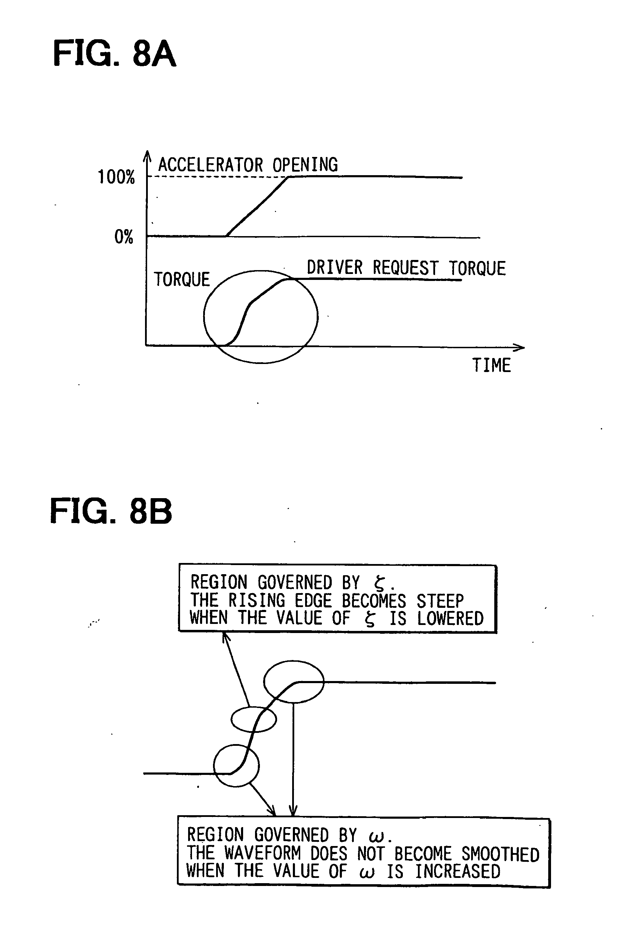

As mentioned above, the second-order lag filter 32 in this embodiment is expressed by a transfer function of $\omega^2 / (S^2 + 2\zeta\omega s + \omega^2)$ As illustrated in FIG. 8, the frequency response $\omega$ and the damping coefficient $\zeta$ may be so constructed that they can be changed in accordance with the following: an acceleration/deceleration request from the driver; acceleration/deceleration reactivity; a request from the engine 6; the operational status of the engine 6; or the driving status of the vehicle. In this case, the smoothing rate for the response waveform (stepwise unsmoothed torque: Refer to FIG. 14, for example.) of driver request torque can be optimized. An example will be taken. The rising edge or falling edge of the response waveform (smoothed torque) of driver request torque is a region governed by frequency response $\omega$ (region dependent on frequency response $\omega$). Therefore, when the value of frequency response $\omega$ is lowered, the smoothing rate is increased (the slope of the response waveform of the rising edge or falling edge becomes gentle). When the value of frequency response $\omega$ is increased, conversely, the smoothing rate is lowered (the slope of the response waveform of the rising edge or falling edge becomes steep).

The intermediate region of the response waveform (smoothed torque) of driver request torque is a region governed by damping coefficient $\zeta$ (region dependent on damping coefficient $\xi$). Therefore, when the value of damping coefficient $\zeta$ is lowered, the smoothing rate is lowered (the slope of the response waveform of the intermediate region becomes steep). When the value of damping coefficient $\zeta$ is increased, conversely, the smoothing rate is increased (the slope of the response waveform of the intermediate region becomes gentle). The convergence region of the response waveform (smoothed torque) of driver request torque is a region governed by frequency response $\omega$ (region dependent on frequency response $\omega$). Therefore, when the value of frequency response $\omega$ is lowered, the smoothing rate is increased (the slope of the response waveform of the rising edge or falling edge becomes gentle). When the value of frequency response $\omega$ is increased, conversely, the smoothing rate is lowered (the slope of the response waveform of the rising edge or falling edge becomes steep).

[Second Embodiment]

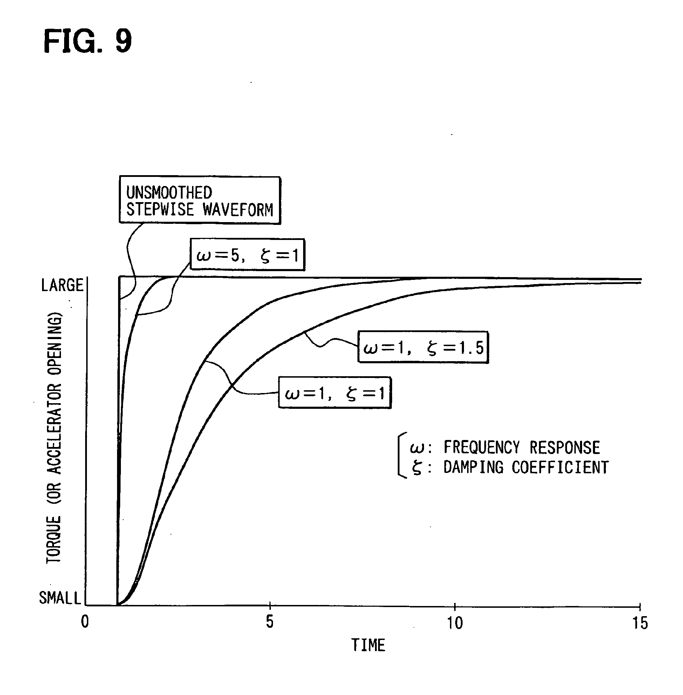

FIG. 9 shows a second embodiment of the present invention, and it is a drawing illustrating a method for changing the smoothing rate of the second-order lag filter.

In this embodiment, a second-order lag filter 32 expressed by a transfer function of $\omega^2 / (S^2 + 2\zeta\omega s + \omega^2)$ is established as the following filtering means as in the first embodiment: a filtering means that smoothes the response waveform (unsmoothed torque: unsmoothed stepwise waveform) of driver request torque computed by the unprocessed torque computing means 31 at a predetermined smoothing rate. The second-order lag filter 32 is so constructed that the following is implemented: it more tilts the rising edge or falling edge of the response waveform (smoothed torque) of driver request torque as the engine revolution speed NE further goes to the high speed side or the low speed side or as the shift stage of the transmission 8 further goes to the high speed stage side or the low speed stage side. Thus, by making smoothing not work when the driver depresses the accelerator pedal to cause the vehicle take off, for example, the drivability can be improved. Conversely, smoothing can be made to work when the driver depresses the accelerator pedal to cause the vehicle to take off. Thus, initial shock encountered when the vehicle takes off and (sudden fluctuation in) forward/backward acceleration that occurs after the vehicle accelerated/decelerated can be prevented. Further, smoothing can be made not to work when the driver depresses the accelerator pedal to pass a vehicle in front during high-speed driving. Thus, the driver can smoothly transition from constant-speed driving to acceleration driving to overtake.

[Third Embodiment]

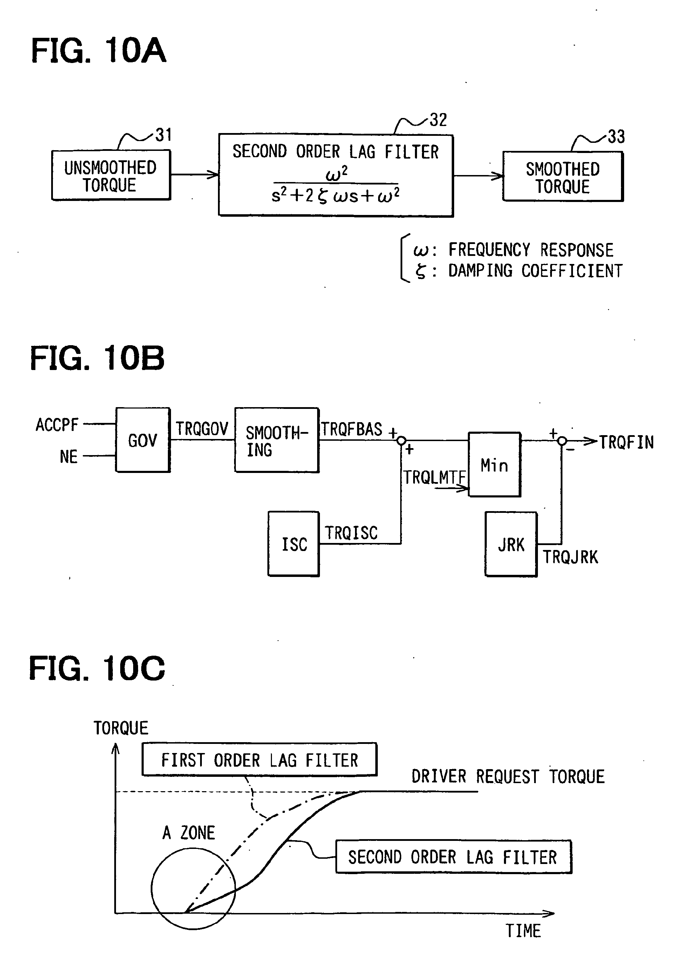

FIG. 10 shows a third embodiment of the present invention. FIG. 10A is a drawing illustrating a smoothing method using a second-order lag filter, and FIG. 10C is a timing chart illustrating the torque response waveform produced when an acceleration/deceleration request is made. The control logic in FIG. 10B illustrates a computation method for driver request torque based on accelerator opening (ACCPF) and engine revolution speed (NE), used in injector injection quantity control.

The ECU 15 computes an accelerator opening (ACCPF) based on an accelerator opening signal outputted from the accelerator opening sensor 1. It measures the time interval of NE signal pulses taken in from the crank angle sensor 2, and thereby computes an engine revolution speed (NE). The ECU 15 computes a governor pattern torque (TRQGOV) corresponding to the accelerator opening (ACCPF) and the engine revolution speed (NE) based on a map stored in memory, such as EEPROM or standby RAM (governor pattern torque computing means: GOV). As illustrated in FIG. 10A and 10B, the ECU 15 converts the governor pattern torque (TRQGOV) into an unsmoothed torque, and passes it through the second-order lag filter 32 to convert it into a smoothed torque (TRQFBAS) (smoothing means, filtering means).

Thereafter, the ECU 15 adds an idle torque (TRQISC) with which an idle revolution speed set by an idle revolution speed controlling means (ISC) can be maintained to the above smoothed torque (TRQFBAS). The ECU 15 adds or subtracts a correction torque (TRQJRK) for suppressing fluctuation in the revolution speed of the engine 6 to or from the minimum value (Min) of a value obtained by adding the idle torque (TRQISC) to the smoothed torque (TRQFBAS) and an upper limit torque (TRQLMTF) set in accordance with the specifications of the engine 6. The thus obtained value is taken as final drive request torque (TRQFIN).

[Fourth Embodiment]

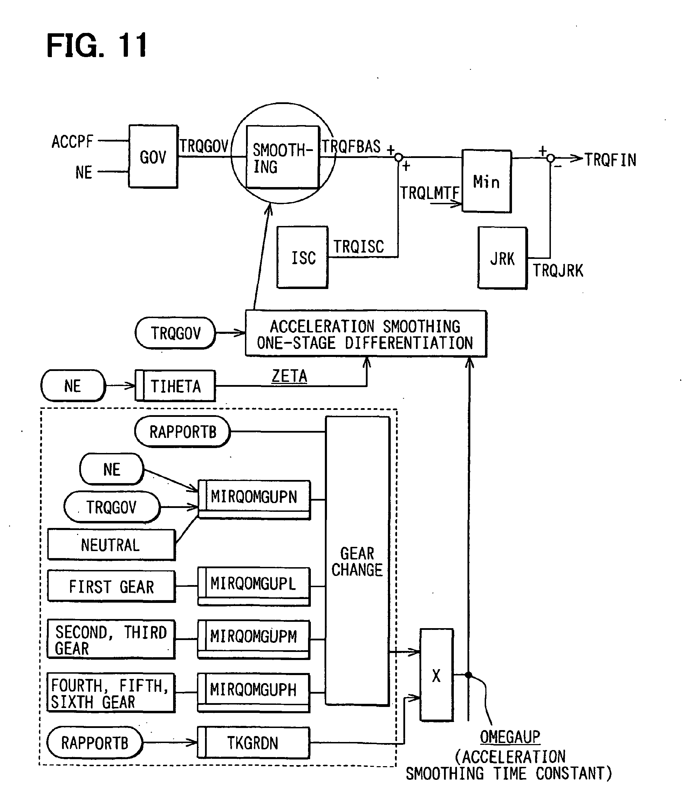

FIG. 11 shows a fourth embodiment of the present invention. The control logic in FIG. 11 illustrates a method for changing the smoothing rate of the second-order lag filter.

In this embodiment, the following expression is used for the filtering means that smoothes the governor pattern torque (TRQGOV) in the third embodiment at a predetermined smoothing rate: the expression of $\omega^2 \times (u - y) - 2\xi\omega \times sy$ in acceleration smoothing one-stage differentiated state, replaced with the transfer function of the above second-order lag filter 32 for the purpose of computation by the ECU 15. In this expression, $\omega$ is a value of acceleration smoothing time constant OMEGAUP (= frequency response $\omega \times$ shift stage correction coefficient); u is governor pattern torque (TRQGOV); y is smoothed torque (TRQFBAS); $\xi$ is a value of damping coefficient; and s is Laplace operator. This filtering means is so constructed that the following can be implemented: the value of acceleration smoothing time constant OMEGAUP (= frequency response $\omega \times$ shift stage correction coefficient) and the value of damping coefficient $\zeta$ can be varied in accordance with the engine revolution speed (NE) or the shift stage of the transmission 8. First, the value of damping coefficient $\zeta$ is changed into a damping coefficient (ZETA) corresponding to the engine revolution speed (NE) based on a one-dimensional map (TIHETA) stored in memory, such as EEPROM or standby RAM.

The acceleration smoothing time constant OMEGAUP is changed into a frequency response $\omega$ corresponding to the governor pattern torque (TRQGOV) and the engine revolution speed (NE) based on a two-dimensional map stored in memory, such as EEPROM or standby RAM. The two-dimensional map is so constructed that its horizontal axis represents governor pattern torque (TRQGOV) and its vertical axis represents engine revolution speed (NE) (MIRQOMGUPN, MIRQOMGUPL, MIRQOMGUPM, MIRQOMGUPH). With respect to frequency response $\omega$, a value corresponding to the shift stage (neutral, first gear, second or third gears, or fourth, fifth, or sixth gear) of the transmission 8 is selected (or set) by a shift stage changing means (gear stage changing means). The shift stage changing means changes the frequency response $\omega$ according to the shift stage (gear stage) of the transmission 8. The value of frequency response $\omega$ is converted into a value obtained by multiplying the frequency response $\omega$ set in correspondence with each shift stage of the transmission 8 based on a two-dimensional map by the shift stage correction coefficient (TKGRDN) set in correspondence with each shift stage (RAPPORTB) of the transmission 8. That is, the value of frequency response $\omega$ is converted into an acceleration smoothing time constant OMEGAUP.

The following constitution may be adopted: the value of frequency response $\omega$ is fixed at 1, and the value of damping coefficient $\zeta$ is changed in accordance with the engine revolution speed (NE). The following constitution may be adopted: the value of damping coefficient $\zeta$ is fixed at 1, and the value of frequency response $\omega$ is changed in accordance with each shift stage (RAPPORTB) of the transmission 8 or the gear ratio. The shift stage (gear position) of the transmission 8 may be computed from the following: the speed ratio (NV ratio) of the vehicle speed (V) equivalent to the revolution speed of the output shaft of the transmission 8 to the engine revolution speed (NE) equivalent to the revolution speed of the output shaft of the engine 6. Rewriting of the contents of memory, such as EEPROM or standby RAM may be carried out as follows: a volume switch dedicated to service is operated to reset the value of frequency response $\omega$, the value of acceleration smoothing time constant OMEGAUP, and the value of damping coefficient $\zeta$ according to the driver's feeling.

When two or more operating switches provided in the instrument panel of the vehicle are simultaneously pressed, or when one or more operating switches are held down for a long time, the following operation may be permitted: the value of frequency response $\omega$, the value of acceleration smoothing time constant OMEGAUP, and the value of damping coefficient $\zeta$ are reset according to the driver's feeling. The possible feeling of the driver includes that associated with the following, for example: whether to change the smoothing rate to that at which torque is largely smoothed or to that at which the degree of torque smoothing is reduced; whether to change the drive mode to that in which the effect of initial acceleration/deceleration shock suppression takes precedence over accelerator response, or to that in which accelerator response takes precedence over the effect of initial acceleration/deceleration shock suppression; and the like.

[Modifications]

In the above embodiments, a torque control system for vehicle of the present invention is applied to a common rail-type fuel injection system (diesel engine control system). Instead, a torque control system for vehicle of the present invention may be applied to the following: fuel injection equipment for internal combustion engine of such type that no common rail 11 is provided and high-pressure fuel is pressure fed from a fuel supply pump directly to fuel injection valves or fuel injection nozzles through a high-pressure supply pipe. A torque control system for vehicle of the present invention may be applied to the following: an engine torque control device (engine control system) that controls the quantity of intake air going toward the cylinders of the engine mounted in a vehicle in correspondence with the amount of a driver's accelerator operation. A torque control system for vehicle of the present invention may be applied to a motor torque control device (motor control system) that controls a motor driving current for driving the motor for running mounted in a vehicle in correspondence with the amount of a driver's accelerator operation.

In the above embodiments, memory, such as EEPROM or standby RAM, is used as the vehicle specification storing means that stores constants based on vehicle specifications reset by the vehicle specification changing means. Instead, nonvolatile memory, such as EPROM or flash memory, or any other storage media, such as DVD-ROM, CD-ROM, or flexible disk, may be used to store constants based on vehicle specifications reset by the vehicle specification changing means. In this case as well, the stored contents are maintained even after the ignition switch is turned off (IG / OFF) and then a predetermined time has passed or even after the operation of the engine 6 is stopped.

In the above embodiments, vehicle weight (m or W) is used for a constant based on vehicle weight as a vehicle specification. Instead, a value obtained by vehicle weight (m or W) x correction coefficient may be used as a constant based on vehicle weight as a vehicle specification. In the above embodiments, tire effective radius (tire radius: r) is used for a constant based on tire effective radius as a vehicle specification. Instead, a value obtained by tire effective radius (tire radius: r) x correction coefficient may be used for a constant based on tire effective radius as a vehicle specification. In the above embodiments, final transmission gear ratio is used for a constant based on final transmission gear ratio as a vehicle specification. Instead, the following may be used for a constant based on final transmission gear ratio as a vehicle specification: a value obtained by multiplying together the transmission gear ratios of a plurality of speed change portions, for example, the transmission gear ratio of a transmission and the transmission gear ratio of a differential x correction coefficient. In the above embodiments, running resistance coefficient (Cd) is used for a constant based on air resistance coefficient as a vehicle specification. Instead, a value obtained by running resistance coefficient (Cd) x correction coefficient may be used for a constant based on air resistance coefficient as a vehicle specification. In the above embodiments, frontal projected area (S) is used for a constant based on frontal projected area as a vehicle specification. Instead, a value obtained by frontal projected area (S) x correction coefficient may be used for a constant based on frontal projected area as a vehicle specification.

In the above embodiments, the response waveform (unsmoothed torque) of driver request torque is smoothed at a predetermined smoothing rate. Instead, the following procedure may be taken: an accelerator opening signal outputted from the accelerator opening sensor 1 or an accelerator opening computed based on this accelerator opening signal is smoothed at a predetermined smoothing rate; and a driver request torque is computed based on this smoothed accelerator opening signal or accelerator opening. In addition, the output shaft torque of a power source, such as engine or motor, that drives the wheels of a vehicle may be directly variably controlled based on the smoothed accelerator opening signal or accelerator opening.

The following storing means (e.g. memory, such as EEPROM, ROM, standby RAM, or RAM) may be provided: a storing means that stores beforehand the correspondence between the injection quantity of fuel or the quantity of intake air supplied to the cylinders of an engine and driver request torque based on map data or computational expression data. Then, the response waveform (unsmoothed torque or smoothed torque) of driver request torque computed by the driver request torque computing means may be converted into injection quantity or intake air quantity based on the map data or computational expression data stored in the storing means (memory). The following storing means (e.g. memory, such as EEPROM, ROM, standby RAM, or RAM) may be provided: a storing means that stores beforehand the correspondence between the value of damping coefficient $\zeta$ and engine revolution speed (NE) based on map data or computational expression data. Then, the value of damping coefficient $\zeta$ may be converted into engine revolution speed (NE) based on the map data or computational expression data stored in the storing means (memory).

The following storing means (e.g. memory, such as EEPROM, ROM, standby RAM, or RAM) may be provided: a storing means that stores beforehand the correspondence between the value of frequency response $\omega$, the response waveform (unsmoothed torque) of driver request torque, and engine revolution speed (NE) based on map data or computational expression data. Then, the value of frequency response $\omega$ may be converted in correspondence with engine revolution speed (NE) based on the map data or computational expression data stored in the storing means (memory). The following storing means (e.g. memory, such as EEPROM, ROM, standby RAM, or RAM) may be provided: a storing means that stores beforehand the correspondence between the value of frequency response $\omega$ and each shift stage of the transmission 8. Then, the value of frequency response $\omega$ may be converted in correspondence with each shift stage of the transmission 8 based on the map data or computational expression data stored in the storing means (memory).

An accelerator opening changes with time when an acceleration/deceleration request is made by a driver. A filtering device smoothes the response waveform (unsmoothed torque) of driver request torque obtained at this time at a predetermined smoothing rate. A second-order lag filter (32) expressed by a transfer function of $\omega^2 / (S^2 + 2\zeta\omega s + \omega^2)$ is established as such a filtering means. Using this second-order lag filter (32), the rising edge or falling edge of the response waveform (smoothed torque) of driver request torque is made gentler in slope than the intermediate region of the response waveform (smoothed torque) of driver request torque and than cases where a first-order lag filter is used. Thus, the initial acceleration/deceleration shock encountered when an acceleration/deceleration request is made can be sufficiently mitigated.

**Claims**

1. A torque control system for vehicle comprising:

   an accelerator opening computing means (**15, S1**) that computes an accelerator opening based on an accelerator opening signal outputted from an accelerator opening sensor (**1**); and
   a power source controlling means (**15**) that variably controls the output shaft torque of a power source for driving the wheels of a vehicle, based on the accelerator opening, wherein
   the accelerator opening computing means (**15**, **S1**) has a filtering means (**32**) that smoothes the response waveform of the accelerator from a rising edge or a falling edge to a target value through an intermediate region at a predetermined smoothing rate, and
   the filtering means (**32**) makes the rising edge or falling edge of the response waveform of the accelerator opening gentler in slope than the intermediate region of the response waveform of the accelerator opening when an acceleration/deceleration request is generated, **characterized in that**
   the filtering means (**32**) includes a second-order lag filter that makes the rising edge or falling edge of the response waveform of the accelerator opening or the driver request torque gentler in slope than when a first-order lag filter is used.

2. The torque control system for vehicle according to Claim 1 2, wherein
   the filtering means (**32**) includes a second-order lag filter expressed by a transfer function of $\omega^2/(s^2 + 2\zeta\omega s + (\omega^2)$, and frequency response w and damping coefficient $\zeta$ are changed according to the operational status of the power source or the driving status of the vehicle mounted with the power source.

3. The torque control system for vehicle according to Claim 1 or 2, further comprising:

   a revolution speed detecting means (**15**) that detects the revolution speed of the output shaft of the power source, wherein
   according as the revolution speed of the output shaft of the power source detected by the revolution speed detecting means departs more from the medium speed range toward the high speed side or low speed side, the filtering means tilts more the rising edge or falling edge of the response waveform of the accelerator opening or the driver request torque.

4. The torque control system for vehicle according to any one of Claims 1 to 3, further comprising:

   a transmission system (**8**) having a multistage gear transmission for transmitting the output shaft torque of the power source to the wheels, and a shift stage detecting means (**15**) that detects the shift stage of the multistage gear transmission, wherein
   according as the shift stage detected by the shift stage detecting means departs more from the medium speed stage toward the high speed stage side or low speed stage side, the filtering means tilts more the rising edge or falling edge of the response waveform of the accelerator opening or the driver request torque.

5. The torque control system for vehicle according to any one of Claims 1 to 4, wherein
   the power source controlling means (**15**) is an engine controlling means that variably controls the injection quantity of fuel or the quantity of intake air supplied to the cylinders of an engine as the power source based on the accelerator opening or the driver request torque,
   an acceleration/deceleration request determining means (**15**) is provided which computes a rate of temporal change in the driver's accelerator operation or the accelerator opening signal or a rate of temporal change in the injection quantity or the intake air quantity, and compares magnitude between the rate of change and a preset acceleration determination threshold value and deceleration determination threshold value, and

when the rate of change is equal to or higher than the acceleration determination threshold value, the acceleration/deceleration request determining means determines that the driver has requested acceleration, and when the rate of change is equal to or lower than the deceleration determination threshold value, the acceleration/deceleration request determining means determines that the driver has requested deceleration.

6. The torque control system for vehicle according to any one of Claims 1 to 5, wherein
the power source controlling means (**15**) is a motor controlling means that variably controls a motor driving current supplied to a motor as the power source based on the accelerator opening or the driver request torque,
an acceleration/deceleration request determining means (**15**) is provided which computes a rate of temporal change in the driver's accelerator operation or the accelerator opening signal or a rate of temporal change in the motor driving current, and compares magnitude between the rate of change and a preset acceleration determination threshold value and deceleration determination threshold value, and
when the rate of change is equal to or higher than the acceleration determination threshold value, the acceleration/deceleration request determining means determines that the driver has requested acceleration, and when the rate of change is equal to or lower than the deceleration determination threshold value, the acceleration/deceleration request determining means determines that the driver has requested deceleration.

**Patentansprüche**

1. Drehmomentsteuerungssystem für ein Fahrzeug mit
einer Fahrpedalöffnungsberechnungseinrichtung (**15**, **S1**), die eine Fahrpedalöffnung auf der Grundlage eines aus einem Fahrpedalöffnungssensor (**1**) ausgegebenen Fahrpedalöffnungssignals berechnet; und
einer Leistungsquellensteuerungseinrichtung (**15**), die variabel das Ausgangswellendrehmoment einer Leistungsquelle zum Antreiben der Räder eines Fahrzeugs auf der Grundlage der Fahrpedalöffnung steuert, wobei
die Fahrpedalöffnungsberechnungseinrichtung (**15**, **S1**) eine Filterungseinrichtung (**32**) aufweist, die die Antwortwellenform des Fahrpedals von einer ansteigenden Flanke oder einer abfallenden Flanke auf einen Sollwert durch eine Zwischenregion mit einer vorbestimmten Glättungsrate glättet, und
die Filterungseinrichtung (**32**) die ansteigende Flanke oder die abfallende Flanke der Antwortwellenform der Fahrpedalöffnung in einer Neigung sanfter als in dem Zwischenbereich der Antwortwellenform der Fahrpedalöffnung macht, wenn eine Beschleunigungs-/Verlangsamungsanforderung erzeugt wird,
**dadurch gekennzeichnet, dass**
die Filterungseinrichtung (**32**) ein Verzögerungsfilter zweiter Ordnung aufweist, das die ansteigende Flanke oder die abfallende Flanke der Antwortwellenform der Fahrpedalöffnung oder des Fahreranforderungsdrehmoments in einer Neigung sanfter macht, als wenn ein Verzögerungsfilter erster Ordnung verwendet wird.

2. Drehmomentsteuerungssystem für ein Fahrzeug nach Anspruch 1, wobei
die Filterungseinrichtung (**32**) ein Verzögerungsfilter der zweiten Ordnung aufweist, das durch die Übertragungsfunktion $\omega^2/(s^2 + 2\zeta\omega s + \omega^2)$ ausgedrückt ist, und
eine Frequenzantwort $\omega$ und ein Dämpfungskoeffizient $\zeta$ entsprechend dem Betriebszustand der Leistungsquelle oder dem Betriebszustand des Fahrzeugs, bei dem die Leistungsquelle montiert ist, geändert werden.

3. Drehmomentsteuerungssystem für ein Fahrzeug nach Anspruch 1 oder 2, weiterhin mit
einer Drehzahlerfassungseinheit (**15**), die die Drehzahl der Ausgangswelle der Leistungsquelle erfasst, wobei
entsprechend davon, ob die von der Drehzahlerfassungseinheit erfasste Drehzahl der Ausgangwelle der Leistungsquelle von dem mittleren Drehzahlbereich mehr zu der Hochdrehzahlseite oder der Niedrigdrehzahlseite abweicht,
die Filterungseinheit die ansteigende Flanke oder die abfallende Flanke der Antwortwellenform der Fahrpedalöffnung oder des Fahreranforderungsdrehmoments stärker neigt.

4. Drehmomentsteuerungssystem nach einem der Ansprüche 1 bis 3, weiterhin mit
einem Getriebesystem (**8**) mit einem Mehrstufengetriebe zum Übertragen des Ausgangswellendrehmoments der Leistungsquelle auf die Räder, und einer Schaltstufenerfassungseinrichtung (**15**), die die Schaltstufe des Mehrstufengetriebes erfasst, wobei
entsprechend davon, ob die von der Schaltstufenerfassungseinrichtung erfasste Schaltstufe von dem mittleren Drehzahlbereich stärker zu der Hochdrehzahlseite oder der Niedrigdrehzahlseite abweicht, die Filterungseinheit die ansteigende Flanke oder die abfallende Flanke der Antwortwellenform der Fahrpedalöffnung oder des Fahreranforderungsdrehmoments stärker neigt.

5. Drehmomentsteuerungssystem nach einem der Ansprüche 1 bis 4, wobei

die Leistungsquellensteuerungseinrichtung (**15**) eine Maschinensteuerungseinrichtung ist, die die Einspritzmenge von Kraftstoff oder die Menge von Ansaugluft, die den Zylindern einer Maschine als Leistungsquelle zugeführt wird, auf der Grundlage der Fahrpedalöffnung oder des Fahreranforderungsdrehmoments variabel steuert, eine Beschleunigungs-/Verlangsamungsanforderungsbestimmungseinrichtung (**15**) vorgesehen ist, die eine Rate einer zeitlichen Änderung in der Fahrpedalbedienung durch den Fahrer oder des Fahrpedalöffnungssignals oder ein Rate einer zeitlichen Änderung in der Einstpritzmenge oder der Ansaugluftmenge berechnet, und eine Größe zwischen der Rate der Änderung und einem vorab eingestellten Beschleunigungsbestimmungsschwellwert und einem Verlangsamungsbestimmungsschwellwert berechnet, und wenn die Rate der Änderung gleich wie oder größer als der Beschleunigungsbestimmungsschwellwert ist, die Beschleunigungs/Verlangsamungsanforderungsbestimmungseinrichtung bestimmt, dass der Fahrer eine Beschleunigung angefordert hat, und wenn die Rate der Änderung gleich wie oder kleiner als der Verlangsamungsbestimmungsschwellwert ist, die Beschleunigungs-/Verlangsamungsanforderungsbestimmungseinrichtung bestimmt, dass der Fahrer eine Verlangsamung angefordert hat.

6. Drehmomentsteuerungssystem für ein Fahrzeug nach einem der Ansprüche 1 bis 5, wobei

die Leistungsquellensteuerungseinrichtung (**15**) eine Motorsteuerungseinrichtung ist, die einen Motorantriebsstrom, der einem Motor als die Leistungsquelle zugeführt wird, auf der Grundlage der Fahrpedalöffnung oder des Fahreranforderungsdrehmoments variabel steuert, eine Beschleunigungs-/Verlangsamungsanforderungsbestimmungseinrichtung (**15**) vorgesehen ist, die eine Rate einer zeitlichen Änderung in der Fahrpedalbedienung durch den Fahrer oder des Fahrpedalöffnungssignals oder ein Rate einer zeitlichen Änderung in dem Motorantriebsstrom berechnet, und eine Größe zwischen der Rate der Änderung und einem vorab eingestellten Beschleunigungsbestimmungsschwellwert und einem Verlangsamungsbestimmungsschwellwert berechnet, und wenn die Rate der Änderung gleich wie oder größer als der Beschleunigungsbestimmungsschwellwert ist, die Beschleunigungs/Verlangsamungsanforderungsbestimmungseinrichtung bestimmt, dass der Fahrer eine Beschleunigung angefordert hat, und wenn die Rate der Änderung gleich wie oder kleiner als der Verlangsamungsbestimmungsschwellwert ist, die Beschleunigungs-/Verlangsamungsanforderungsbestimmungseinrichtung bestimmt, dass der Fahrer eine Verlangsamung angefordert hat.

**Revendications**

1. Système de contrôle de couple pour un véhicule comprenant :

un moyen de calcul d'ouverture d'accélérateur (**15**, **S1**) qui calcule une ouverture d'accélérateur en fonction d'un signal d'ouverture d'accélérateur produit par un capteur d'ouverture d'accélérateur (**1**) ; et un moyen de contrôle de source d'énergie (**15**) qui contrôle de façon variable le couple sur l'arbre de sortie d'une source d'énergie pour entraîner les roues d'un véhicule, en fonction de l'ouverture d'accélérateur, dans lequel le moyen de calcul d'ouverture d'accélérateur (**15**, **S1**) a un moyen de filtrage (**32**) qui lisse la forme d'onde de réponse de l'accélérateur d'un front montant ou descendant à une valeur cible à travers une région intermédiaire à une vitesse de lissage prédéterminée, et le moyen de filtrage (**32**) rend la pente du front montant ou du front descendant de la forme d'onde de réponse de l'ouverture d'accélération plus douce que la région intermédiaire de la forme d'onde de réponde l'ouverture d'accélérateur lorsqu'une demande d'accélération/décélération est générée, **caractérisé en ce que** le moyen de filtrage (**32**) inclut un filtre de retard de deuxième ordre qui rend la pente de front montant ou descendant de la forme d'onde de réponse de l'ouverture d'accélérateur ou du couple demandé par le conducteur plus douce que lorsqu'un filtre de premier-ordre est utilisé.

2. Système de contrôle de couple pour un véhicule selon la revendication 1, dans lequel le moyen de filtrage (**32**) inclut un filtre de retard de deuxième ordre exprimé par la fonction de transfert $\dfrac{\omega^2}{s^2 + 2\zeta\omega s + \omega^2}$, et la réponse en fréquence $\omega$ et le coefficient d'amortissement $\zeta$ sont modifiés selon le statut opérationnel de la source d'énergie ou le statut de conduite du véhicule monté avec la source d'énergie.

3. Système de contrôle de couple pour un véhicule selon la revendication 1 ou 2, comprenant en outre :

un moyen de détection de vitesse de rotation (**15**) qui détecte la vitesse de rotation de l'arbre de sortie de la source d'énergie, dans lequel
selon que la vitesse de rotation de l'arbre de sortie de la source d'énergie détectée par le moyen de détection de vitesse de rotation s'écarte davantage de la gamme de vitesses moyennes vers la partie à grande vitesse ou la partie à basse vitesse, le moyen de filtrage incline davantage le front montant ou le front descendant de la forme d'onde de réponse de l'ouverture d'accélérateur ou du couple souhaité par le conducteur.

4. Système de contrôle de couple pour un véhicule selon l'une quelconque des revendications 1 à 3, comprenant en outre :

un système de transmission (**8**) ayant une transmission par engrenage à niveaux multiples destiné à transmettre le couple sur l'arbre de sortie de la source d'énergie aux roues, et un moyen de détection de changement de vitesse (**15**) qui détecte le changement de vitesse de la transmission par engrenage à niveaux multiples, dans lequel
selon que le changement de vitesse détecté par le moyen de détection de changement de vitesse s'écarte davantage du niveau de vitesse moyenne vers le niveau de grande vitesse ou le niveau de basse vitesse, le moyen de filtrage incline davantage le front montant ou le front descendant de la forme d'onde de réponse de l'ouverture d'accélérateur ou du couple demandé par le conducteur.

5. Système de contrôle de couple pour un véhicule selon l'une quelconque des revendications 1 à 4, dans lequel
le moyen de contrôle de source d'énergie (**15**) est un moyen de contrôle de machine qui contrôle de façon variable la quantité d'injection de carburant ou la quantité d'air d'admission fournie aux cylindres d'une machine en tant que source d'énergie en fonction de l'ouverture d'accélérateur ou du couple demandé par le conducteur,
un moyen de détermination de demande d'accélération/décélération (**15**) est prévu, qui calcule une vitesse de changement temporel dans l'action du conducteur sur l'accélérateur ou dans le signal d'ouverture d'accélérateur ou un vitesse de changement temporel dans la quantité d'injection ou dans la quantité d'air admis, et compare la magnitude entre la vitesse de changement et une valeur seuil préréglée de détermination d'accélération et valeur seuil de détermination de décélération, et
lorsque la vitesse de changement est égale ou supérieure à la valeur seuil de détermination d'accélération, le moyen de détermination de demande d'accélération/décélération détermine que le conducteur a demandé une accélération, et lorsque la vitesse de changement est égale ou inférieure à la valeur seuil de détermination de décélération, le moyen de détermination de demande d'accélération/décélération détermine que le conducteur a demandé une décélération.

6. Système de contrôle de couple pour un véhicule selon l'une quelconque des revendications 1 à 5, dans lequel
le moyen de contrôle de source d'énergie (**15**) est un moyen de contrôle de moteur qui contrôle de façon variable un courant d'entraînement de moteur fourni à un moteur en tant que source d'énergie en fonction de l'ouverture d'accélérateur ou du couple demandé par le conducteur,
un moyen de détermination de demande d'accélération/décélération (**15**) est prévu qui calcule une vitesse de changement temporel dans l'action du conducteur sur l'accélérateur ou dans le signal d'ouverture d'accélérateur ou une vitesse de changement temporel dans le courant d'entraînement du moteur, et compare la magnitude entre la vitesse de changement et une valeur seuil préréglée de détermination d'accélération et valeur seuil de détermination de décélération, et
lorsque la vitesse de changement est égale ou supérieur à la valeur seuil de détermination d'accélération, le moyen de détermination de demande d'accélération/décélération détermine que le conducteur a demandé une accélération, et lorsque la vitesse de changement est égale ou inférieure à la valeur seuil de détermination de décélération, le moyen de détermination de demande d'accélération/décélération détermine que le conducteur a demandé une décélération.

# FIG. 1A

```
       ┌─────31          ┌─────────32              ┌─────33
┌────────────────┐   ┌──────────────────────┐   ┌──────────────┐
│  UNSMOOTHED    │   │ SECOND ORDER LAG FILTER│  │  SMOOTHED    │
│  TORQUE        │──▶│          ω²           │──▶│  TORQUE      │
│                │   │   ─────────────────   │   │              │
└────────────────┘   │   s²+2ζωs+ω²          │   └──────────────┘
                     └──────────────────────┘
```

$$\frac{\omega^2}{s^2+2\zeta\omega s+\omega^2}$$

$\omega$: FREQUENCY RESPONSE
$\zeta$: DAMPING COEFFICIENT

# FIG. 1B

TORQUE

FIRST ORDER LAG FILTER

DRIVER REQUEST TORQUE

A ZONE

SECOND ORDER LAG FILTER

TIME

# FIG. 2

# FIG. 3

# FIG. 4

```
              ┌─────────────┐
              │    START    │
              └──────┬──────┘
                     │
   ┌─────────────────────────────────┐
   │       TAKE IN SENSOR SIGNALS     │──S1
   └─────────────────┬────────────────┘
                     │
   ┌─────────────────────────────────┐
   │       COMPUTE TARGET SPEED       │──S2
   └─────────────────┬────────────────┘
                     │
   ┌─────────────────────────────────┐
   │    COMPUTE TARGET ACCELERATION   │──S3
   └─────────────────┬────────────────┘
                     │
   ┌─────────────────────────────────┐
   │      READ CONSTANT BASED ON      │──S4
   │      VEHICLE SPECIFICATIONS      │
   └─────────────────┬────────────────┘
                     │
   ┌─────────────────────────────────┐
   │    COMPUTE RUNNING RESISTANCE    │──S5
   └─────────────────┬────────────────┘
                     │
   ┌─────────────────────────────────┐
   │       COMPUTE WHEEL TORQUE       │──S6
   └─────────────────┬────────────────┘
                     │
   ┌─────────────────────────────────┐
   │   COMPUTE DRIVER REQUEST TORQUE  │──S7
   └─────────────────┬────────────────┘
                     │
   ┌─────────────────────────────────┐
   │   COMPUTE BASIC INJECTION QUANTITY │──S8
   └─────────────────┬────────────────┘
                     │
   ┌─────────────────────────────────┐
   │    COMPUTE AMOUNT OF INJECTION   │──S9
   │        QUANTITY CORRECTION       │
   └─────────────────┬────────────────┘
                     │
   ┌─────────────────────────────────┐
   │          COMPUTE QFIN            │──S10
   └─────────────────┬────────────────┘
                     │
   ┌─────────────────────────────────┐
   │  COMPUTE COMMAND INJECTION TIMING │──S11
   └─────────────────┬────────────────┘
                     │
   ┌─────────────────────────────────┐
   │  COMPUTE COMMAND INJECTION PERIOD │──S12
   └─────────────────┬────────────────┘
                     │
   ┌─────────────────────────────────┐
   │        DRIVING INJECTORS         │──S13
   └─────────────────┬────────────────┘
                     │
              ┌──────┴──────┐
              │     END     │
              └─────────────┘
```

# FIG. 5

CONVERSION INTO TARGET SPEED

COMPUTATION OF ACCELERATION RESISTANCE

CONVERSION INTO WHEEL TORQUE

CONVERSION INTO ENGINE OUTPUT SHAFT TORQUE

ACCELERATOR OPENING

CONVERSION INTO TARGET SPEED

$\dfrac{K \cdot s}{s+w}$

DIFFEREN-TIATOR

m

VEHICLE WEIGHT

r

TIRE RADIUS

×

÷

DRIVER REQUEST TORQUE

GEAR POSITION

???

GEAR RATIO

$\dfrac{w}{s+w}$

FIRST ORDER LAG FILTER

f(u)

$0.5 \times \rho \times V^2 \times S \times Cd$

COMPUTATION OF AIR RESISTANCE

m

VEHICLE WEIGHT

f(u)

$\mu \times m \times g$

COMPUTATION OF ROLLING RESISTANCE

TARGET REVOLUTION SPEED

ACTUAL REVOLUTION SPEED

+_

PID

FEEDBACK OF REVOLUTION SPEED

FEEDBACK COMPUTATION OF REVOLUTION SPEED

EP 1 650 416 B1

# FIG. 6

ACCELERATOR OPENING

CONVERSION INTO TARGET SPEED

$\dfrac{K \cdot s}{s+w}$

DIFFERENTIATOR

m

VEHICLE WEIGHT

$\dfrac{w}{s+w}$

FIRST ORDER LAG FILTER

f(u)

$0.5 \times \rho \times V^2 \times S \times Cd$

m

VEHICLE WEIGHT

f(u)

$\mu \times m \times g$

RUNNING RESISTANCE

EP 1 650 416 B1

# FIG. 7

START

READ SENSOR SIGNALS
AND WHEEL TORQUE $\quad$ —S21

COMPUTE UNSMOOTHED TORQUE $\quad$ —S22

COMPUTE RATE OF CHANGE $\quad$ —S23

S24

ACCELERATION/
DECELERATION REQUEST
? $\qquad$ YES

NO

SECOND ORDER LAG FILTER $\quad$ —S25

$$\frac{\omega^2}{s^2+2\zeta\omega s+\omega^2}$$

COMPUTE SMOOTHED TORQUE $\quad$ —S26

COMPUTE DRIVER
REQUEST TORQUE $\quad$ —S27

END

# FIG. 8A

100%  ACCELERATOR OPENING

0%

TORQUE    DRIVER REQUEST TORQUE

TIME

# FIG. 8B

REGION GOVERNED BY $\zeta$.
THE RISING EDGE BECOMES STEEP
WHEN THE VALUE OF $\zeta$ IS LOWERED

REGION GOVERNED BY $\omega$.
THE WAVEFORM DOES NOT BECOME SMOOTHED
WHEN THE VALUE OF $\omega$ IS INCREASED

# FIG. 9

UNSMOOTHED
STEPWISE WAVEFORM

$\omega = 5, \quad \zeta = 1$

LARGE

TORQUE (OR ACCELERATOR OPENING)

$\omega = 1, \quad \zeta = 1.5$

$\omega = 1, \quad \zeta = 1$

$\omega$: FREQUENCY RESPONSE
$\zeta$: DAMPING COEFFICIENT

SMALL

0          5          10          15

TIME

## FIG. 10A

UNSMOOTHED TORQUE ~31 → SECOND ORDER LAG FILTER ~32

$$\frac{\omega^2}{s^2+2\zeta\omega s+\omega^2}$$

→ SMOOTHED TORQUE ~33

$\omega$ : FREQUENCY RESPONSE
$\zeta$ : DAMPING COEFFICIENT

## FIG. 10B

ACCPF → GOV → TRQGOV → SMOOTH-ING → TRQFBAS + → TRQLMTF → Min → + - → TRQFIN

ISC → TRQISC

JRK → TRQJRK

## FIG. 10C

TORQUE

FIRST ORDER LAG FILTER

DRIVER REQUEST TORQUE

A ZONE

SECOND ORDER LAG FILTER

TIME

# FIG. 11

# FIG. 12A

```
┌──────────────┐      ┌────────────────────────┐      ┌──────────────┐
│ UNSMOOTHED   │ ───► │  FIRST ORDER LAG FILTER │ ───► │  SMOOTHED    │
│   TORQUE     │      │          ω              │      │   TORQUE     │
│              │      │        ─────            │      │              │
│              │      │         s+ω             │      │              │
└──────────────┘      └────────────────────────┘      └──────────────┘
```

# FIG. 12B

# FIG. 13

# FIG. 14

**EP 1 650 416 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7150998 A
- JP 11182294 A
- DE 19534633 A1
- DE 19753996 A1
- EP 1447546 A2
- EP 1555410 A2